(19) Europäisches Patentamt
European Patent Office
Office européen des brevets

(11) EP 1 097 971 B1

(12) EUROPÄISCHE PATENTSCHRIFT

(45) Veröffentlichungstag und Bekanntmachung des Hinweises auf die Patenterteilung:
**23.07.2003 Patentblatt 2003/30**

(51) Int Cl.$^7$: **C09B 62/09**, C09B 62/513
// C09B62/51, C09B62/475

(21) Anmeldenummer: **00811000.9**

(22) Anmeldetag: **27.10.2000**

(54) **Reaktivfarbstoffe, Verfahren zu deren Herstellung und deren Verwendung**

Reactive dyes, process for their preparation and the use thereof

Colorants réactifs, procédé pour leur préparation et leur utilisation

(84) Benannte Vertragsstaaten:
**CH DE ES FR GB IT LI**

(30) Priorität: **05.11.1999 EP 99811015**

(43) Veröffentlichungstag der Anmeldung:
**09.05.2001 Patentblatt 2001/19**

(60) Teilanmeldung:
**03003629.7 / 1 312 651**

(73) Patentinhaber: **Ciba Specialty Chemicals Holding Inc.
4057 Basel (CH)**

(72) Erfinder:
- **Tzikas, Athanassios
4133 Pratteln (CH)**
- **Deitz, Rolf (verstorben)
79639 Grenzach-Wyhlen (DE)**
- **Klier, Herbert
79588 Efringen-Kirchen (DE)**

(56) Entgegenhaltungen:
**EP-A- 0 282 443**
**EP-A- 0 538 900**
**EP-A- 0 745 650**
**GB-A- 1 155 149**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

EP 1 097 971 B1

## Beschreibung

Die vorliegende Erfindung betrifft neue Reaktivfarbstoffe, Verfahren zu ihrer Herstellung und ihre Verwendung zum Färben oder Bedrucken von textilen Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe, für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen Farbstoffen die gestellte Aufgabe weitgehend gelöst wird.

Gegenstand der vorliegenden Erfindung sind daher Reaktivfarbstoffe der Formel (1a)

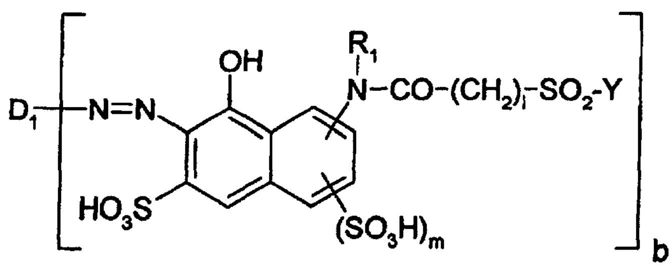

(1a),

worin

b die Zahl 1 ist,
$R_1$ Wasserstoff oder $C_1$-$C_4$-Alkyl ist,
Y Vinyl oder einen Rest $-CH_2-CH_2-U$ bedeutet und U eine alkalisch abspaltbare Gruppe ist,
l die Zahl 2, 3, 4, 5 oder 6 bedeutet,
m die Zahl 0 oder 1 ist, und
$D_1$ für den Rest der Formel

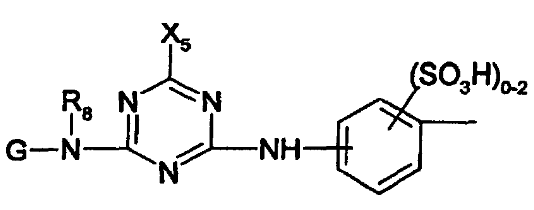

(7)

steht, worin
$R_8$ Wasserstoff oder $C_1$-$C_4$-Alkyl ist,
$X_5$ Fluor oder Chlor bedeutet, und
G für einen Monoazo- oder Disazorest der Formel (8) oder (9)

$$D\text{-}N{=}N\text{-}(M\text{-}N{=}N)_u\text{-}K\text{-} \quad (8)$$

oder

$$\text{-}D\text{-}N{=}N\text{-}(M\text{-}N{=}N)_u\text{-}K \quad (9)$$

steht, worin
D der Rest einer Diazokomponente der Benzol- oder Naphthalinreihe ist,
M den Rest einer Mittelkomponente der Benzol- oder Naphthalinreihe bedeutet,
K der Rest einer Kupplungskomponente der Benzol-, Naphthalin-, Pyrazolon-, 6-Hydroxypyridon-(2)- oder Acetessigsäurearylamid-Reihe ist, und
u die Zahl 0 oder 1 ist, wobei D, M und K bei Azofarbstoffen übliche Substituenten tragen können, oder
$D_1$ für den Rest der Formel (10a), (10b), (10d), (10e), (10f), (11a), (11b), (11c), (11d), (11e) oder (11f)

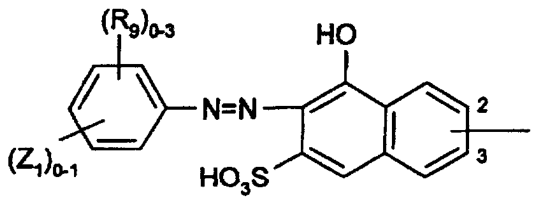

(10a),

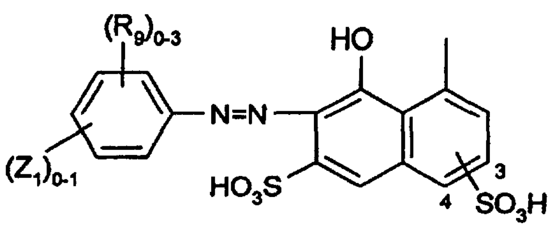

(10b),

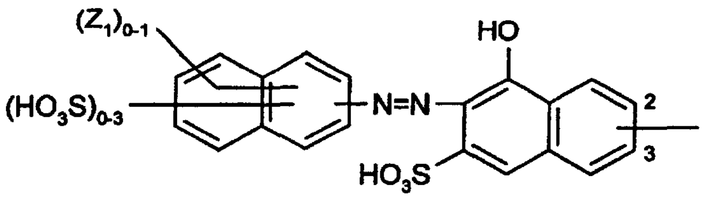

(10d),

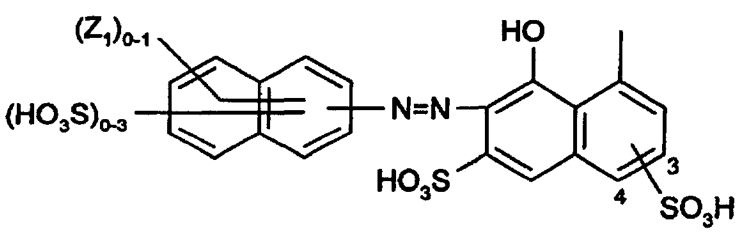

(10e),

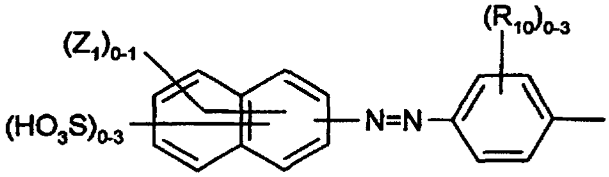

(10f),

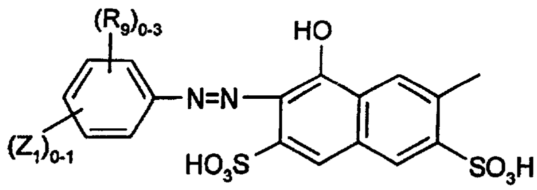

(11a),

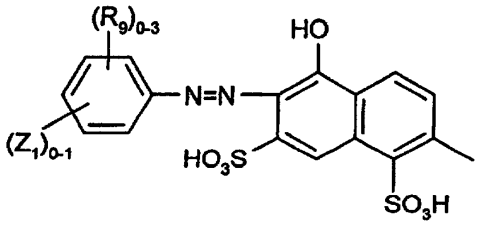

(11b),

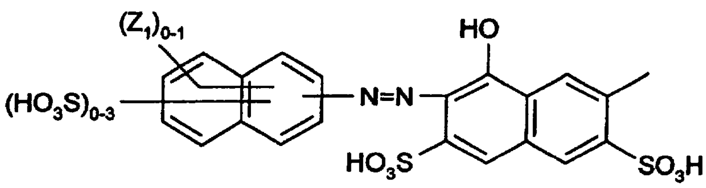

(11c),

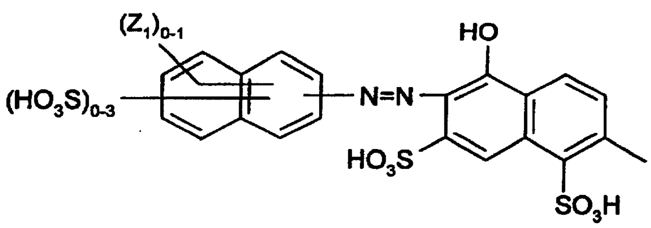

(11d),

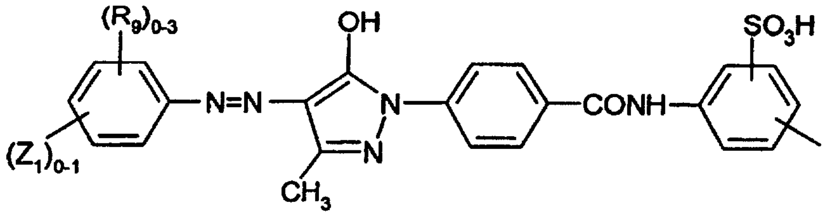

(11e)

oder

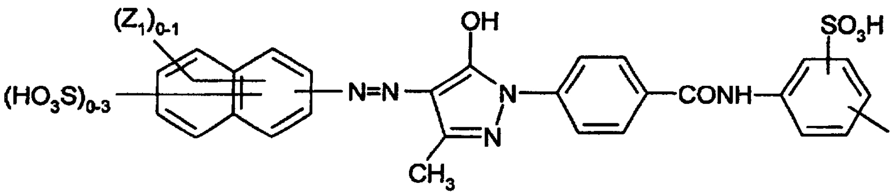

(11f)

steht, worin

$(R_9)_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht,

$(R_{10})_{0-3}$ für 0 bis 3 gleiche oder verschiedene Substituenten aus der Gruppe Halogen, Nitro, Cyan, Trifluormethyl, Sulfamoyl, Carbamoyl, $C_1$-$C_4$-Alkyl, gegebenenfalls durch Hydroxy, Sulfato oder $C_1$-$C_4$-Alkoxy substituiertes $C_1$-$C_4$-Alkoxy, Amino, $C_2$-$C_4$-Alkanoylamino, Ureido, Hydroxy, Carboxy, Sulfomethyl, $C_1$-$C_4$-Alkylsulfonylamino und Sulfo, vorzugsweise für 0 bis 2 gleiche oder verschiedene Substituenten aus der Gruppe $C_1$-$C_4$-Alkyl, $C_1$-$C_4$-Alkoxy, $C_2$-$C_4$-Alkanoylamino, Ureido, Sulfo und gegebenenfalls im Alkylteil durch Hydroxy oder Sulfato substituiertes $C_1$-$C_4$-Alkoxy, steht, und

$Z_1$ gegebenenfalls einen Rest der Formel (2a), (5a), (5b), (5c), (5d) oder (5e)

$$-NH-CO-(CH_2)_l-SO_2-Y \quad (2a),$$

$$-SO_2-Y \quad (5a),$$

$$-CO-NH-(CH_2)_k-SO_2-Y \quad (5b),$$

$$-NH-CO-CH(Hal)-CH_2-Hal \quad (5c),$$

$$-NH-CO-C(Hal)=CH_2 \quad (5d),$$

oder

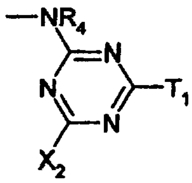

(5e),

vorzugsweise (2a), (5a) oder (5b) und insbesondere (5a), bedeutet, worin
Hal Chlor oder Brom ist;
$X_2$ Halogen, 3-Carboxypyridin-1-yl oder 3-Carbamoylpyridin-1-yl bedeutet;
$T_1$ unabhängig die Bedeutung von $X_2$ hat, für einen nicht-faserreaktiven Substituenten oder für einen faserreaktiven Rest der Formel (6a), (6b), (6c), (6d), (6e) oder (6f)

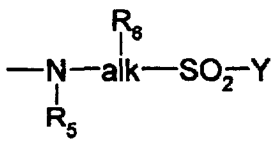

(6a),

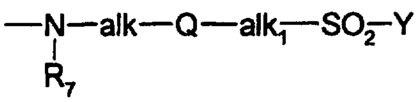

(6b),

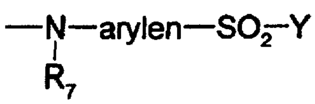

(6c),

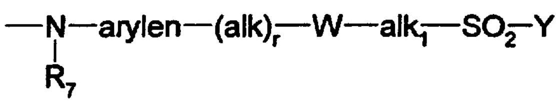

(6d),

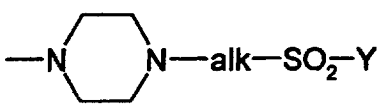

(6e) oder

oder

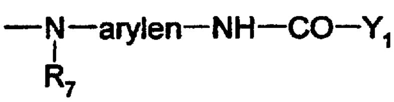

(6f)

steht, worin
$R_4$ und $R_7$ unabhängig voneinander die gleichen Bedeutungen wie $R_1$ haben,
$R_5$ Wasserstoff, gegebenenfalls durch Hydroxy, Sulfo, Sulfato, Carboxy oder Cyano substituiertes $C_1$-$C_4$-Alkyl oder einen Rest

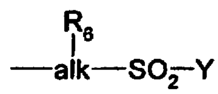

bedeutet,

$R_6$ Wasserstoff, Hydroxy, Sulfo, Sulfato, Carboxy, Cyano, Halogen, $C_1$-$C_4$-Alkoxycarbonyl, $C_1$-$C_4$-Alkanoyloxy, Carbamoyl oder die Gruppe -$SO_2$-Y ist,

alk und $alk_1$ unabhängig voneinander lineares oder verzweigtes $C_1$-$C_6$-Alkylen sind,

arylen einen unsubstituierten oder durch Sulfo, Carboxy, $C_1$-$C_4$-Alkyl, $C_1$-$C_4$-Alkoxy oder Halogen substituierten Phenylen- oder Naphthylenrest bedeutet,

Q ein Rest -O- oder -$NR_7$-, worin $R_7$ die oben angegebene Bedeutung hat, ist,

W für eine Gruppe -$SO_2$-$NR_5$-, -$CONR_5$- oder -$NR_5CO$- steht, worin $R_5$ die oben angegebene Bedeutung hat,

Y die oben angegebenen Bedeutungen hat,

$Y_1$ für eine Gruppe -CH(Hal)-$CH_2$-Hal oder -C(Hal)=$CH_2$ steht und Hal Chlor oder Brom bedeutet,

l die oben angegebenen Bedeutungen hat, und

k die Zahl 2, 3, 4, 5 oder 6 und r die Zahl 0 oder 1 sind.

Gegenstand der vorliegenden Erfindung sind femer Reaktivfarbstoffe der Formel (1b)

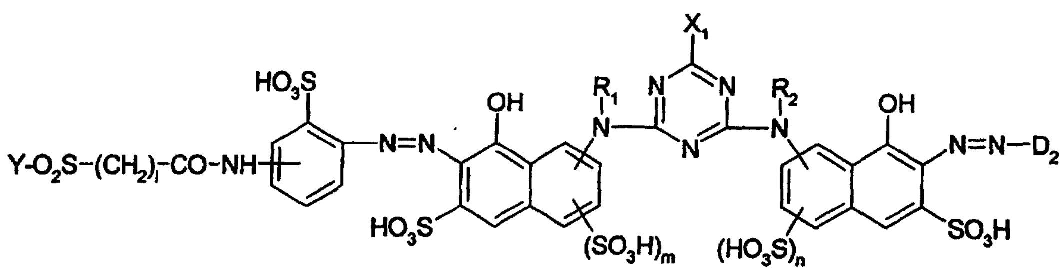
(1b),

worin

$D_2$ für den Rest einer Diazokomponente der Benzol- oder Naphthalinreihe steht,

$R_1$ und $R_2$ unabhängig voneinander Wasserstoff oder $C_1$-$C_4$-Alkyl sind,

$X_1$ Fluor oder Chlor ist,

Y Vinyl oder einen Rest -$CH_2$-$CH_2$-U bedeutet und U eine alkalisch abspaltbare Gruppe ist,

l die Zahl 2, 3, 4, 5 oder 6 bedeutet, und

m und n unabhängig voneinander die Zahl 0 oder 1 sind.

Die Reste $R_1$ und $R_2$ sind als Alkylreste geradkettig oder verzweigt. Als Beispiele seien die folgenden Reste genannt: Methyl, Ethyl, Propyl, Isopropyl, Butyl, Isobutyl, sek.-Butyl oder tert.-Butyl.

Bevorzugt sind $R_1$ und $R_2$ Wasserstoff oder Methyl und ganz besonders Wasserstoff.

Als alkalisch abspaltbare Gruppe U kommt z.B. -Cl, -Br, -F, -$OSO_3H$, -$SSO_3H$, -OCO-$CH_3$, -$OPO_3H_2$, -OCO-$C_6H_5$, -$OSO_2$-$C_1$-$C_4$-Alkyl oder -$OSO_2$-N($C_1$-$C_4$-Alkyl)$_2$ in Betracht. Bevorzugt ist U eine Gruppe der Formel -Cl, -$OSO_3H$, -$SSO_3H$, -OCO-$CH_3$, -OCO-$C_6H_5$ oder -$OPO_3H_2$, insbesondere -Cl oder -$OSO_3H$.

Beispiele für geeignete Reste Y sind dementsprechend Vinyl, β-Brom- oder β-Chlorethyl, β-Acetoxyethyl, β-Benzoyloxyethyl, β-Phosphatoethyl, β-Sulfatoethyl und β-Thiosulfatoethyl. Y steht bevorzugt für Vinyl, β-Chlorethyl oder β-Sulfatoethyl.

$X_1$ ist vorzugsweise Chlor.

l steht bevorzugt für die Zahl 3 oder 4 und insbesondere 3.

Vorzugsweise bedeutet m die Zahl 1.

Als Substituenten von $D_1$ und $D_2$ kommen die für Azofarbstoffe üblichen Substituenten in Betracht. Als Beispiele seien die folgenden genannt: $C_1$-$C_4$-Alkyl, worunter Methyl, Ethyl, n-oder iso-Propyl, n-, iso-, sec.- oder tert. -Butyl zu verstehen ist; $C_1$-$C_4$-Alkoxy, worunter Methoxy, Ethoxy, n- oder iso-Propoxy oder n-, iso-, sec.- oder tert.

-Butoxy zu verstehen ist; Hydroxy-$C_1$-$C_4$-Alkoxy; Phenoxy; gegebenenfalls im Alkylteil durch Hydroxy oder $C_1$-$C_4$-Alkoxy substituiertes $C_2$-$C_6$-Alkanoylamino, wie z.B. Acetylamino, Hydroxyacetylamino, Methoxyacetylamino oder Propionylamino; gegebenenfalls im Phenylteil durch Hydroxy, Sulfo, Halogen, $C_1$-$C_4$-Alkyl oder $C_1$-$C_4$-Alkoxy substituiertes Benzoylamino; gegebenenfalls im Alkylteil durch Hydroxy, $C_1$-$C_4$-Alkyl oder $C_1$-$C_4$-Alkoxy substituiertes $C_1$-$C_6$-Alkoxycarbonylamino; gegebenenfalls im Phenylteil durch Hydroxy, $C_1$-$C_4$-Alkyl oder $C_1$-$C_4$-Alkoxy substituiertes Phenoxycarbonylamino; Amino; gegebenenfalls im Alkylteil durch Hydroxy, $C_1$-$C_4$-Alkoxy, Carboxy, Cyano, Halogen, Sulfo, Sulfato, Phenyl oder Sulfophenyl substituiertes N-$C_1$-$C_4$-Alkyl- oder N,N-Di-$C_1$-$C_4$-Alkylamino, wie z.B. Methylamino, Aethylamino, N,N-Dimethylamino, N,N-Diethylamino, β-Cyanoethylamino, β-Hydroxyethylamino, N,N-Di-β-Hydroxyethylamino, β-Sulfoethylamino, γ-Sulfo-n-propylamino, β-Sulfatoethylamino, N-Ethyl-N-(3-Sulfobenzyl)-amino, N-(β-Sulfoethyl)-N-benzylamino; Cyclohexylamino; gegebenenfalls im Phenylteil durch Nitro, $C_1$-$C_4$-Alkyl, $C_1$-$C_4$-Alkoxy, Carboxy, Halogen oder Sulfo substituiertes N-Phenylamino oder N-$C_1$-$C_4$-Alkyl-N-phenylamino; $C_1$-$C_4$-Alkoxycarbonyl, z.B. Methoxy- oder Ethoxycarbonyl; Trifluoromethyl; Nitro; Cyano; Halogen, worunter generell z.B. Fluor, Brom oder insbesondere Chlor zu verstehen ist; Ureido; Hydroxy; Carboxy; Sulfo; Sulfomethyl; Carbamoyl; Carbamido; Sulfamoyl; gegebenenfalls im Phenylteil durch Sulfo oder Carboxy substituiertes N-Phenylsulfamoyl oder N-$C_1$-$C_4$-Alkyl-N-phenylsulfamoyl; Methyl- oder Aethylsulfonyl.

Als Substituenten von $D_1$ und $D_2$ kommen auch faserreaktive Reste in Betracht.

Unter faserreaktiven Resten sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen. Die faserreaktiven Reste sind in der Regel direkt oder über ein Brückenglied an den Farbstoffrest gebunden. Geeignete faserreaktive Reste sind beispielsweise solche, die mindestens einen abspaltbaren Substituenten an einem aliphatischen, aromatischen oder heterocyclischen Rest enthalten oder worin die genannten Reste einen zur Reaktion mit dem Fasermaterial geeigneten Rest, wie z.B. einen Vinylrest, enthalten.

Ein in $D_1$ und $D_2$ enthaltener faserreaktiver Rest entspricht bevorzugt der Formel (2a), (5a), (5b), (5c), (5d), (5e) oder (5f)

$$-NH-CO-(CH_2)_l-SO_2-Y \qquad (2a),$$

$$-SO_2-Y \qquad (5a),$$

$$-CO-NH-(CH_2)_k-SO_2-Y \qquad (5b),$$

$$-NH-CO-CH(Hal)-CH_2-Hal \qquad (5c),$$

$$-NH-CO-C(Hal)=CH_2 \qquad (5d),$$

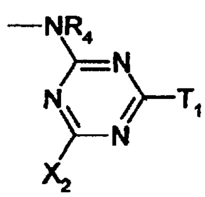

(5e)

oder

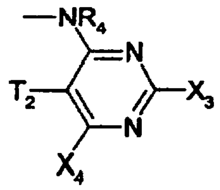

(5f),

worin

Hal Chlor oder Brom ist;

$X_2$ Halogen, 3-Carboxypyridin-1-yl oder 3-Carbamoylpyridin-1-yl bedeutet;

$T_1$ unabhängig die Bedeutung von $X_2$ hat, für einen nicht-faserreaktiven Substituenten oder für einen faserreaktiven Rest der Formel (6a), (6b), (6c), (6d), (6e) oder (6f)

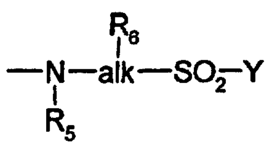

(6a),

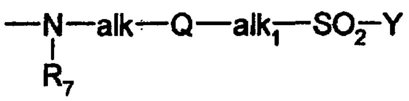

(6b),

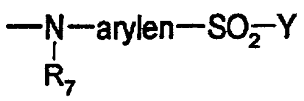

(6c),

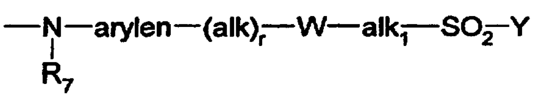

(6d),

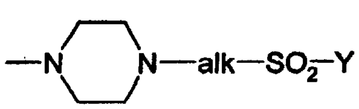

(6e) oder

oder

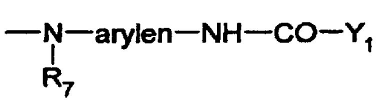

(6f)

steht, worin
$R_4$ und $R_7$ unabhängig voneinander die gleichen Bedeutungen und Bevorzugungen wie $R_1$ und $R_2$ haben,
$R_5$ Wasserstoff, gegebenenfalls durch Hydroxy, Sulfo, Sulfato, Carboxy oder Cyano substituiertes $C_1$-$C_4$-Alkyl oder einen Rest

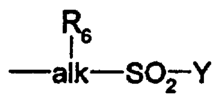

bedeutet,
$R_6$ Wasserstoff, Hydroxy, Sulfo, Sulfato, Carboxy, Cyano, Halogen, $C_1$-$C_4$-Alkoxycarbonyl, $C_1$-$C_4$-Alkanoyloxy, Carbamoyl oder die Gruppe -$SO_2$-Y ist,
alk und $alk_1$ unabhängig voneinander lineares oder verzweigtes $C_1$-$C_6$-Alkylen sind,
arylen einen unsubstituierten oder durch Sulfo, Carboxy, $C_1$-$C_4$-Alkyl, $C_1$-$C_4$-Alkoxy oder Halogen substituierten Phenylen- oder Naphthylenrest bedeutet,
Q ein Rest -O- oder -$NR_7$-, worin $R_7$ die oben angegebene Bedeutung hat, ist,
W für eine Gruppe -$SO_2$-$NR_5$-, -$CONR_5$- oder -$NR_5CO$- steht, worin $R_5$ die oben angegebene Bedeutung hat,
Y die oben angegebenen Bedeutungen und Bevorzugungen hat,
$Y_1$ für eine Gruppe -CH(Hal)-$CH_2$-Hal oder -C(Hal)=$CH_2$ steht und Hal Chlor oder Brom bedeutet, und
l die oben angegebenen Bedeutungen und Bevorzugungen hat,
k die Zähl 2, 3, 4, 5 oder 6 und r die Zahl 0 oder 1 sind; und
$X_3$ Halogen oder $C_1$-$C_4$-Alkylsulfonyl;
$X_4$ Halogen oder $C_1$-$C_4$-Alkyl und
$T_2$ Wasserstoff, Cyano oder Halogen bedeuten.

$R_5$ bedeutet vorzugsweise Wasserstoff oder $C_1$-$C_4$-Alkyl, wie Methyl, Ethyl, Propyl, Isopropyl, Butyl, Isobutyl, sek.-Butyl oder tert.-Butyl und besonders bevorzugt Wasserstoff, Methyl oder Ethyl. Insbesondere bevorzugt ist $R_5$ Wasserstoff.
$R_6$ bedeutet bevorzugt Wasserstoff.
k steht bevorzugt für die Zahl 2 oder 3 und insbesondere 2.
Für einen nicht-faserreaktiven Substituenten $T_1$ kommen z.B. die folgenden Reste in Betracht:

Hydroxy;
$C_1$-$C_4$-Alkoxy, wie beispielsweise Methoxy, Ethoxy, n- oder Isopropoxy, n-, sec.-, iso- oder tert.-Butoxy, insbesondere Methoxy oder Ethoxy; die genannten Reste sind unsubstituiert oder im Alkylteil substituiert, z.B. durch $C_1$-$C_4$-Alkoxy, Hydroxy, Sulfo oder Carboxy;
$C_1$-$C_4$-Alkylthio, wie beispielsweise Methylthio, Ethylthio, n- oder Isopropylthio oder n-Butylthio; die genannten Reste sind unsubstituiert oder im Alkylteil substituiert, z.B. durch $C_1$-$C_4$-Alkoxy, Hydroxy, Sulfo oder Carboxy;
Amino;
N-Mono- oder N,N-Di-$C_1$-$C_6$-Alkylamino, vorzugsweise N-Mono- oder N,N-Di-$C_1$-$C_4$-Alkylamino; die genannten Reste sind unsubstituiert, gegebenenfalls im Alkylteil durch Sauerstoff unterbrochen oder im Alkylteil substituiert, z.B. durch $C_2$-$C_4$-Alkanoylamino, $C_1$-$C_4$-Alkoxy, Hydroxy, Sulfo, Sulfato, Carboxy, Cyano, Carbamoyl oder Sulfamoyl; als Beispiele seien N-Methylamino, N-Ethylamino, N-Propylamino, N,N-Di-Methylamino oder N,N-Di-Ethylamino, N-β-Hydroxyethylamino, N,N-Di-β-Hydroxyethylamino, N-2-(β-Hydroxyethoxy)ethylamino, N-2-[2-(β-Hydroxyethoxy)ethoxy]ethylamino, N-β-Sulfatoethylamino, N-β-Sulfoethylamino, N-Carboxymethylamino, N-β-Carboxyethylamino, N-α,β-Dicarboxyethylamino, N-α,γ-Dicarboxypropylamino, N-Ethyl-N-β-Hydroxyethylamino oder N-Methyl-N-β-Hydroxyethylamino genannt;
$C_5$-$C_7$-Cycloalkylamino, wie z.B. Cyclohexylamino, welches sowohl die unsubstituierten wie auch die im Cycloalkylring z.B. durch $C_1$-$C_4$-Alkyl, insbesondere Methyl, oder Carboxyl substituierten Reste umfasst;
Phenylamino oder N-$C_1$-$C_4$-Alkyl-N-phenylamino, welches sowohl die unsubstituierten wie auch die im Phenylring z.B. durch $C_1$-$C_4$-Alkyl, $C_1$-$C_4$-Alkoxy, $C_2$-$C_4$-Alkanoylamino, Carboxy, Carbamoyl, Sulfo oder Halogen substituierten Reste umfasst, wie beispielsweise 2-, 3- oder 4-Chlorphenylamino, 2-, 3- oder 4-Methylphenylamino, 2-, 3- oder 4-Methoxyphenylamino, 2-, 3- oder 4-Sulfophenylamino, Disulfophenylamino oder 2-, 3- oder 4-Carboxyphenylamino;
gegebenenfalls im Naphthylring z.B. durch Sulfo substituiertes Naphthylamino, vorzugsweise die durch 1 bis 3 Sulfogruppen substituierten Reste, wie beispielsweise 1- oder 2-Naphthylamino, 1-Sulfo-2-naphthylamino, 1,5-Disulfo-2-naphthylamino oder 4,8-Disulfo-2-naphthylamino; oder
gegebenenfalls im Phenylteil z.B. durch $C_1$-$C_4$-Alkyl, $C_1$-$C_4$-Alkoxy, Carboxy; Sulfo oder Halogen substituiertes Benzylamino.

Als nicht-faserreaktiver Rest hat $T_1$ vorzugsweise die Bedeutung $C_1$-$C_4$-Alkoxy, $C_1$-$C_4$-Alkylthio, Hydroxy, Amino, gegebenenfalls im Alkylteil durch Hydroxy, Sulfato oder Sulfo substituiertes N-Mono- oder N,N-Di-$C_1$-$C_4$-Alkylamino, Morpholino, gegebenenfalls im Phenylring durch Sulfo, Carboxy, Acetylamino, Chlor, Methyl oder Methoxy substituiertes Phenylamino oder N-$C_1$-$C_4$-Alkyl-N-phenylamino, worin das Alkyl gegebenenfalls durch Hydroxy, Sulfo oder Sulfato substituiert ist oder gegebenenfalls durch 1 bis 3 Sulfogruppen substituiertes Naphthylamino.

Besonders bevorzugte nicht-faserreaktive Reste $T_1$ sind Amino, N-Methylamino, N-Ethylamino, N-β-Hydroxyethylamino, N-Methyl-N-β-Hydroxyethylamino, N-Ethyl-N-β-Hydroxyethylamino, N,N-Di-β-Hydroxyethylamino, Morpholino, 2-, 3- oder 4-Carboxyphenylamino, 2-, β- oder 4-Sulfophenylamino oder N-$C_1$-$C_4$-Alkyl-N-phenylamino.

$X_2$ bedeutet bevorzugt Halogen, z.B. Fluor, Chlor oder Brom und insbesondere bevorzugt Chlor oder Fluor.

$T_2$, $X_3$ und $X_4$ als Halogen bedeuten z.B. Fluor, Chlor oder Brom, insbesondere Chlor oder Fluor.

$X_3$ als $C_1$-$C_4$-Alkylsulfonyl bedeutet z.B. Ethylsulfonyl oder Methylsulfonyl und insbesondere Methylsulfonyl.

$X_4$ als $C_1$-$C_4$-Alkyl bedeutet z.B. Methyl, Ethyl, n- oder iso-Propyl, n-, iso oder tert.-Butyl und insbesondere Methyl.

$X_3$ und $X_4$ sind bevorzugt unabhängig voneinander Chlor oder Fluor.

$T_2$ bedeutet bevorzugt Cyano oder Chlor.

Hal bedeutet vorzugsweise Brom.

Bei alk und $alk_1$ handelt es sich unabhängig voneinander z.B. um einen Methylen-, Ethylen-, 1,3-Propylen-, 1,4-Butylen-, 1,5-Pentylen- oder 1,6-Hexylenrest oder deren verzweigte Isomere.

Bevorzugt stehen alk und $alk_1$ unabhängig voneinander je für einen $C_1$-$C_4$-Alkylenrest und insbesondere bevorzugt für einen Ethylenrest oder Propylenrest.

arylen ist vorzugsweise ein unsubstituierter oder z.B. durch Sulfo, Methyl, Methoxy oder Carboxy substituierter 1,3- oder 1,4-Phenylenrest und besonders bevorzugt ein unsubstituierter 1,3- oder 1,4-Phenylenrest.

Q steht vorzugsweise für -NH- oder -O- und insbesondere bevorzugt für -O-.

W bedeutet bevorzugt eine Gruppe der Formel -CONH- oder -NHCO-, insbesondere eine Gruppe der Formel -CONH-.

r steht bevorzugt für die Zahl 0.

Die Reaktivreste der Formeln (6a) bis (6f) sind vorzugsweise solche, worin W eine Gruppe der Formel -CONH-, $R_5$, $R_6$ und $R_7$ je Wasserstoff, Q der Rest -O- oder -NH-, alk und $alk_1$ unabhängig voneinander je Ethylen oder Propylen, arylen unsubstituiertes oder durch Methyl, Methoxy, Carboxy oder Sulfo substituiertes Phenylen, Y Vinyl oder β-Sulfatoethyl, $Y_1$ $-CHBr-CH_2Br$ oder $-CBr=CH_2$ und r die Zahl 0 bedeuten.

Ein in $D_1$ und $D_2$ enthaltener faserreaktiver Rest entspricht besonders bevorzugt der Formel (2a), (5a), (5b), (5c), (5d) oder (5e), worin Y Vinyl, β-Chlorethyl oder β-Sulfatoethyl, Hal Brom, $R_4$ Wasserstoff, I die Zahl 3 oder 4, k die Zahl 2 oder 3, $X_2$ Chlor oder Fluor, $T_1$ $C_1$-$C_4$-Alkoxy, $C_1$-$C_4$-Alkylthio, Hydroxy, Amino, gegebenenfalls im Alkylteil durch Hydroxy, Sulfato oder Sulfo substituiertes N-Mono- oder N,N-Di-$C_1$-$C_4$-Alkylamino, Morpholino, gegebenenfalls im Phenylring durch Sulfo, Carboxy, Acetylamino, Chlor, Methyl oder Methoxy substituiertes Phenylamino oder N-$C_1$-$C_4$-Alkyl-N-phenylamino, worin das Alkyl gegebenenfalls durch Hydroxy, Sulfo oder Sulfato substituiert ist oder gegebenenfalls durch 1 bis 3 Sulfogruppen substituiertes Naphthylamino, oder für einen faserreaktiven Rest der Formel (6a'), (6b'), (6c'), (6d') oder (6f)

$$-NH-(CH_2)_{2\text{-}3}-SO_2Y \qquad (6a'),$$

$-NH-(CH_2)_{2-3}-O-(CH_2)_{2-3}-SO_2Y$ (6b'),

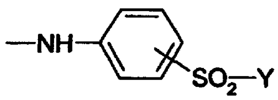

(6c'),

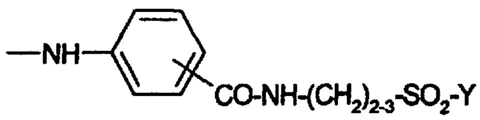

(6d')

oder

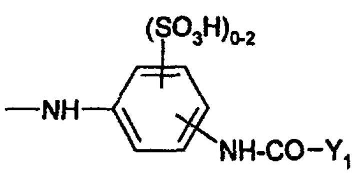

(6f'),

insbesondere (6c') oder (6d'), steht, worin

Y die oben angegebene Bedeutung hat, und
$Y_1$ für eine Gruppe $-CH(Br)-CH_2-Br$ oder $-C(Br)=CH_2$ steht.

Im Fall der Reste der Formeln (6a') und (6b') ist Y bevorzugt β-Chlorethyl. Im Fall der Reste der Formeln (6c') und (6d') ist Y bevorzugt Vinyl oder β-Sulfatoethyl.

Mit dem Begriff "bei Azofarbstoffen übliche Substituenten" sind sowohl faserreaktive als auch nicht-faserreaktive Substituenten, wie z.B. die oben für $D_1$ und $D_2$ angegebenen Substituenten, gemeint.

Als nicht-faserreaktive Substituenten kommen für D, M und K in G vorzugsweise gegebenenfalls durch Hydroxy, Sulfo oder Sulfato weitersubstituiertes $C_1$-$C_4$-Alkyl oder $C_1$-$C_4$-Alkoxy, Halogen, Carboxy, Sulfo, Nitro, Cyan, Trifluormethyl, Sulfamoyl, Carbamoyl, Amino, Ureido, Hydroxy, Sulfomethyl, $C_2$-$C_4$-Alkanoylamino, gegebenenfalls im Phenylring durch $C_1$-$C_4$-Alkyl, $C_1$-$C_4$-Alkoxy, Halogen oder Sulfo substituiertes Benzoylamino oder gegebenenfalls durch $C_1$-$C_4$-Alkyl, $C_1$-$C_4$-Alkoxy, Halogen, Carboxy oder Sulfo substituiertes Phenyl in Betracht.

Die Monoazo- oder Disazoreste der Formel (8) oder (9) enthalten vorzugsweise mindestens eine Sulfogruppe.

Bevorzugte Monoazo- oder Disazoreste G sind die Reste der Formel (10a), (10b), (10c), (10d), (10e), (10f), (10g), (10h), (10i), (10j), (10k), (10l), (10m), (10n), (10o) oder (10p)

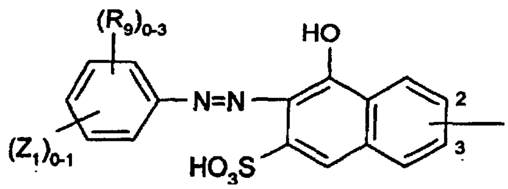

(10a),

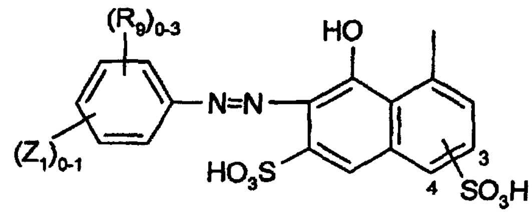

(10b),

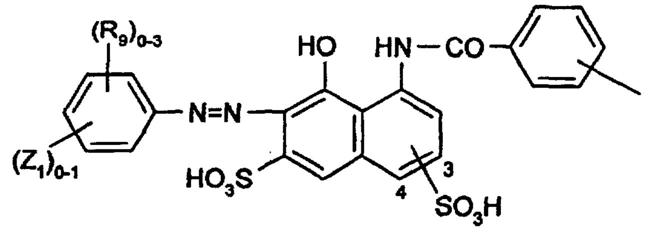

(10c),

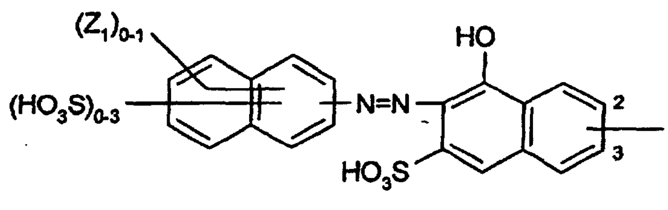

(10d),

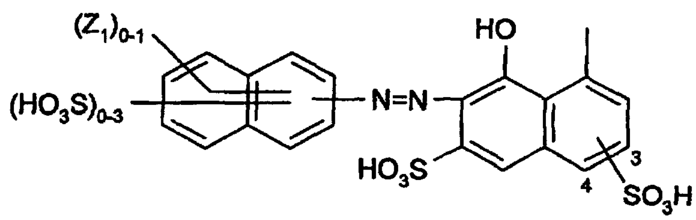

(10e),

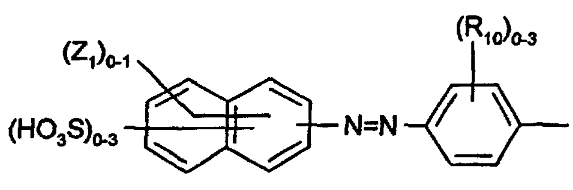

(10f),

worin $(R_9)_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht,

$(R_{10})_{0-3}$ für 0 bis 3 gleiche oder verschiedene Substituenten aus der Gruppe Halogen, Nitro, Cyan, Trifluormethyl, Sulfamoyl, Carbamoyl, $C_1$-$C_4$-Alkyl, gegebenenfalls durch Hydroxy, Sulfato oder $C_1$-$C_4$-Alkoxy substituiertes $C_1$-$C_4$-Alkoxy, Amino, $C_2$-$C_4$-Alkanoylamino, Ureido, Hydroxy, Carboxy, Sulfomethyl, $C_1$-$C_4$-Alkylsulfonylamino und Sulfo, vorzugsweise für 0 bis 2 gleiche oder verschiedene Substituenten aus der Gruppe $C_1$-$C_4$-Alkyl, $C_1$-$C_4$-Alkoxy, $C_2$-$C_4$-Alkanoylamino, Ureido, Sulfo und gegebenenfalls im Alkylteil durch Hydroxy oder Sulfato substituiertes $C_1$-$C_4$-Alkoxy, steht, und

$Z_1$ gegebenenfalls einen Rest der Formel (2a), (5a), (5b), (5c), (5d) oder (5e), vorzugsweise (2a), (5a) oder (5b) und

insbesondere (5a) bedeutet, wobei für die genannten Reste die oben aufgeführten Bedeutungen und Bevorzugungen gelten,

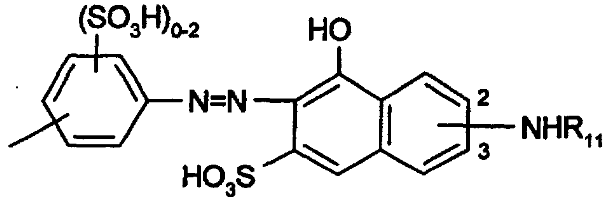

(10g),

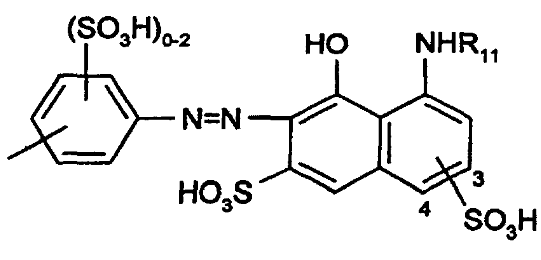

(10h),

worin $R_{11}$ $C_2$-$C_4$-Alkanoyl oder Benzoyl ist,

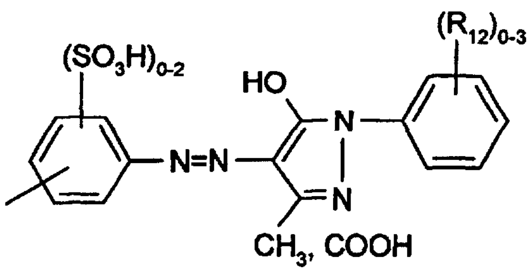

(10i),

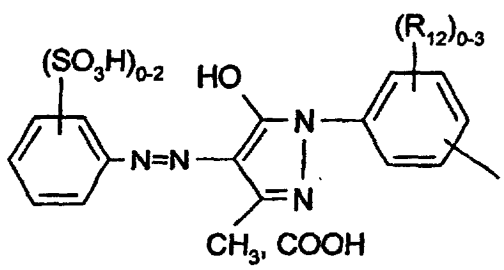

(10j),

worin $(R_{12})_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht,

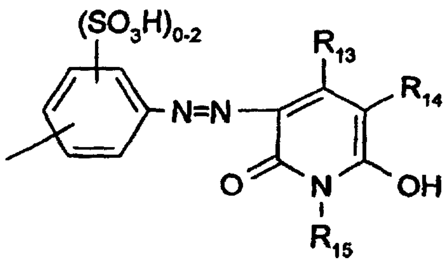

(10k),

worin $R_{13}$ und $R_{15}$ unabhängig voneinander Wasserstoff, $C_1$-$C_4$-Alkyl oder Phenyl, und $R_{14}$ Wasserstoff, Cyano, Carbamoyl oder Sulfomethyl ist,

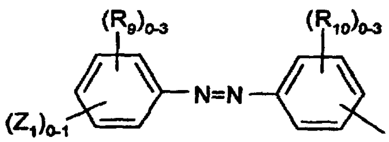

(10l),

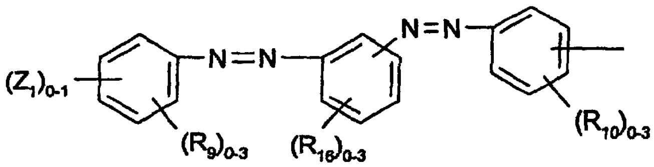

(10m),

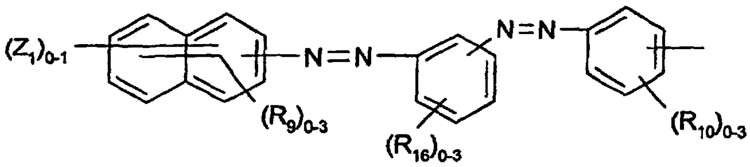

(10n),

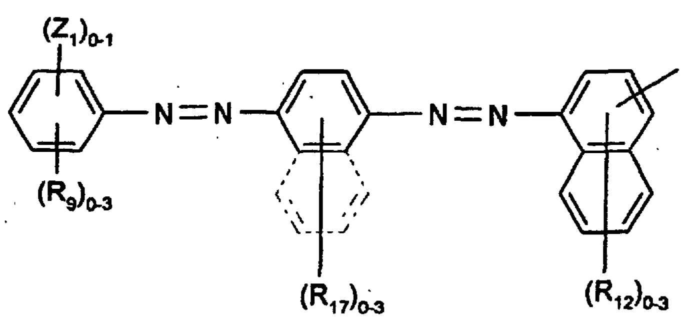

(10o)

oder

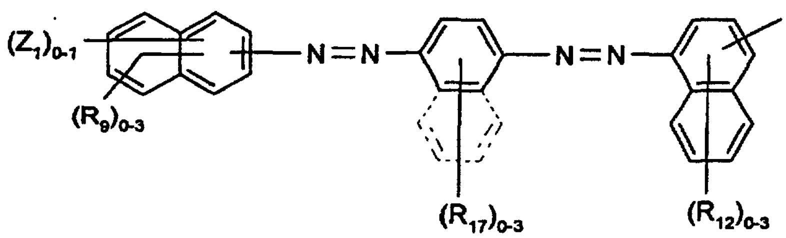

(10p)

worin
$(R_9)_{0-3}$, $(R_{10})_{0-3}$ und $(R_{12})_{0-3}$ jeweils die oben angegebene Bedeutung haben,
$(R_{16})_{0-3}$ und $(R_{17})_{0-3}$ unabhängig voneinander für 0 bis 3 gleiche oder verschiedene Substituenten aus der Gruppe $C_1$-$C_4$-Alkyl, $C_1$-$C_4$-Alkoxy, Halogen, Carboxy oder Sulfo stehen, und für $Z_1$ die oben angegebenen Bedeutungen und Bevorzugungen gelten.

Als $C_1$-$C_4$-Alkyl kommen für $R_8$, $R_9$, $R_{10}$, $R_{12}$, $R_{13}$, $R_{15}$, $R_{16}$ und $R_{17}$ unabhängig voneinander z.B. Methyl, Ethyl, n-Propyl, Isopropyl, n-Butyl, sek.-Butyl, tert.-Butyl oder Isobutyl, vorzugsweise Methyl oder Ethyl, in Betracht. Als $C_1$-$C_4$-Alkyl sind $R_8$ insbesondere Methyl und $R_{15}$ insbesondere Ethyl.

Als $C_1$-$C_4$-Alkoxy kommen für $R_9$, $R_{10}$, $R_{12}$, $R_{16}$ und $R_{17}$ unabhängig voneinander z.B. Methoxy, Ethoxy, n-Propoxy, Isopropoxy, n-Butoxy oder Isobutoxy, vorzugsweise Methoxy oder Ethoxy und insbesondere Methoxy, in Betracht. $R_{10}$ ist unsubstituiert oder gegebenenfalls im Alkylteil durch Hydroxy oder Sulfato substituiert.

Als Halogen kommen für $R_9$, $R_{10}$, $R_{12}$, $R_{16}$ und $R_{17}$ unabhängig voneinander z.B. Fluor, Chlor oder Brom, vorzugsweise Chlor oder Brom und insbesondere Chlor, in Betracht.

Als $C_2$-$C_4$-Alkanoylamino kommt für $R_{10}$ z.B. Acetylamino oder Propionylamino, insbesondere Acetylamino, in Betracht.

$R_{11}$ ist z.B. Acetyl oder Propionyl.

$(R_9)_{0-3}$ in den Disazoresten der Formeln (10n) und (10p) bedeutet vorzugsweise 0 bis 3 Sulfogruppen.

Die Zahlen an den Naphthylringen der Reste der Formeln (10a), (10b), (10c), (10d), (10e), (10g) und (10h) kennzeichnen die möglichen Bindungspositionen.

Besonders bevorzugte Monoazo- oder Disazoreste G sind die Reste der Formel (10a), (10b), (10d), (10e), (10f), (10k) oder (10m), insbesondere (10a), (10b), (10d) oder (10e).

Bevorzugt ist $R_8$ Wasserstoff oder Methyl und ganz besonders Wasserstoff.

$X_5$ ist vorzugsweise Chlor.

$D_1$ als Rest eines Azofarbstoffs der Formel (7) entspricht vorzugsweise der Formel (7a)

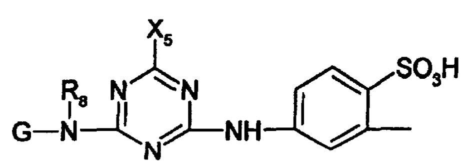

(7a),

worin für $X_5$, $R_8$ und G die oben angegebenen Bedeutungen und Bevorzugungen gelten.

In der weiteren Ausführungsform der vorliegenden Erfindung bedeuten bevorzugte Monoazoreste D, Reste der Formel (10a), (10b), (11a), (11b) oder (11f), insbesondere (11b).

In einer bevorzugten Ausführungsform der erfindungsgemässen Farbstoffe bedeutet $D_1$ einen Rest der Formel (7), worin

$X_5$ Fluor oder Chlor, insbesondere Chlor, ist,
$R_8$ Wasserstoff oder $C_1$-$C_4$-Alkyl, vorzugsweise Wasserstoff oder Methyl und insbesondere Wasserstoff, bedeutet, und
G für einen Monoazorest der oben genannten Formel (10a), (10b), (10d) oder (10e), insbesondere (10a) oder (10b), steht; oder $D_1$ bedeutet
einen Rest der oben angegebenen Formel (10a), (10b), (11a), (11b) oder (11f), insbesondere (11b), wobei für die Substituenten $(R_9)_{0-3}$ und $Z_1$ die oben angegebenen Bedeutungen und Bevorzugungen gelten.

$D_2$ steht beispielsweise für gegebenenfalls durch die oben genannten faserreaktiven und nicht faserreaktiven Substituenten substituiertes Phenyl oder Naphthyl.

Bevorzugt ist $D_2$ ein Rest der Formel (15)

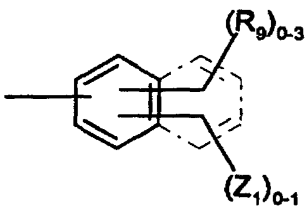

(15),

worin
für $R_9$ und $Z_1$ die oben aufgeführten Bedeutungen und Bevorzugungen gelten.

Besonders bevorzugt steht $D_2$ für einen Rest der Formel (15a), (15b), (15c), (15d) oder (15e)

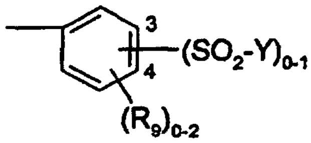

(15a),

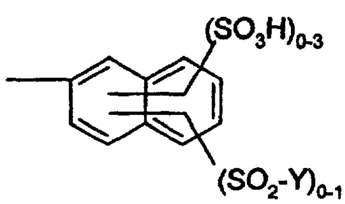

(15b),

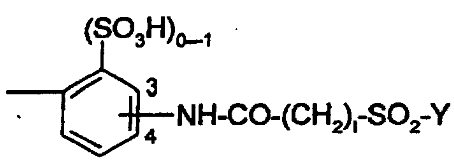

(15c),

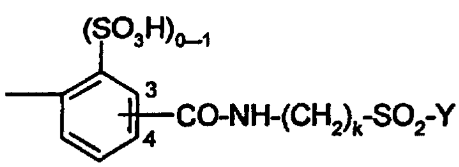

(15d)

oder

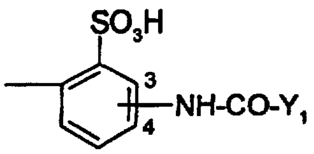

(15e),

worin

$(R_9)_{0-2}$ für 0 bis 2 gleiche oder voneinander verschiedene Substituenten ausgewählt aus der Gruppe Halogen, $C_1$-$C_4$-Alkyl, $C_1$-$C_4$-Alkoxy und Sulfo, insbesondere Methyl, Methoxy und Sulfo, steht,

$Y_1$ für eine Gruppe $-CH(Br)-CH_2-Br$ oder $-C(Br)=CH_2$ steht,
Y Vinyl, β-Chlorethyl oder β-Sulfatoethyl ist,
k für die Zahl 2 oder 3, insbesondere 2, steht und
I die Zahl 3 oder 4, insbesondere 3, bedeutet.

Die Zahlen in den Resten der Formeln (15a), (15c), (15d) und (15e) kennzeichnen die möglichen Bindungspositionen des faserreaktiven Rests.

Ganz besonders bevorzugt bedeutet $D_2$ einen Rest der Formel (15a), (15b), (15c) oder (15d), insbesondere (15a) oder (15b), wobei die Reste der Formel (15a) und (15b) vorzugsweise jeweils einen faserreaktiven Rest enthalten.

Ganz besonders wichtig ist für $D_2$ die Bedeutung als Rest der Formel (15a), wobei der Rest der Formel (15a) vorzugsweise einen faserreaktiven Rest enthält.

Die erfindungsgemässen Reaktivfarbstoffe werden hergestellt, indem man in etwa ein Moläquivalent eines diazotierten Amins der Formel (16)

$$D_1\text{-}NH_2 \qquad (16)$$

auf in etwa ein Moläquivalent einer Verbindung der Formel (17)

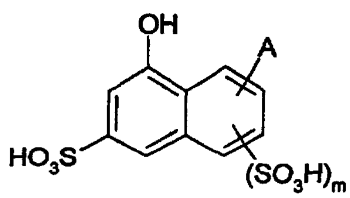

(17)

kuppelt, wobei für m die oben angegebene Bedeutung und Bevorzugung gilt, und A im Fall der Reaktivfarbstoffe der Formel (1a) den Rest der Formel (2)

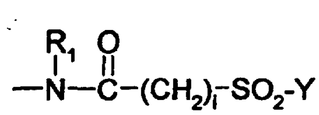

(2)

bedeutet und $D_1$ die oben unter Formel (1a) angegebene Bedeutung und Bevorzugung hat, oder
A im Fall der Reaktivfarbstoffe der Formel (1b) den Rest der Formel (3)

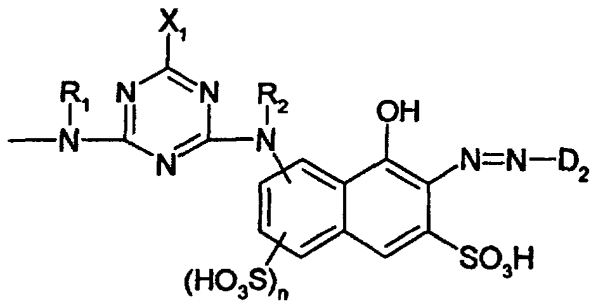

(3)

bedeutet und $D_1$ für einen Rest der Formel

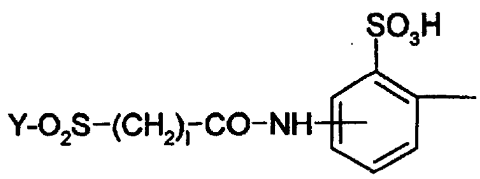

(4')

steht.

Die Diazotierung der Amine der Formel (16) erfolgt z.B. mit einem Nitrit, z.B. mit einem Alkalimetallnitrit wie Natriumnitrit, in einem sauren Medium, z.B. in einem salzsauren Medium, bei Temperaturen von beispielsweise -5 bis 40°C und vorzugsweise bei -5 bis 25°C.

Die Kupplung auf die Kupplungskomponente der Formel (17) erfolgt in an sich bekannter Weise, bei sauren, neutralen bis schwach alkalischen pH-Werten, z.B. einem pH-Wert von 1 bis 10, und Temperaturen von beispielsweise -5 bis 60°C, vorzugsweise 0 bis 30°C.

Verbindungen der Formel (16), worin $D_1$ für einen Rest der Formel (4') steht, sowie die Verbindungen der Formel (17), worin A einen Rest der Formel (2) bedeutet, sind beschrieben, beispielsweise in der GB-A-1,155,149.

Die Verbindung der Formel (17), worin A einen Rest der Formel (3) bedeutet, lässt sich herstellen, z.B. indem man in etwa ein Moläquivalent einer Verbindung der Formel (19)

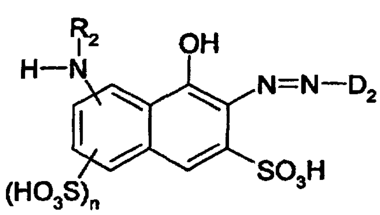

(19)

und in etwa ein Moläquivalent einer Verbindung der Formel (20)

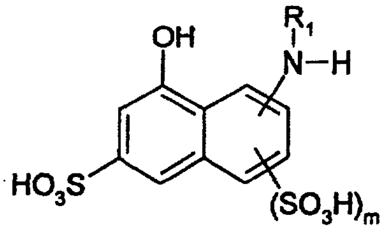

(20)

mit in etwa einem Moläquivalent einer Verbindung der Formel (21)

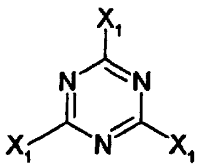

(21)

schrittweise, in beliebiger Reihenfolge kondensiert, wobei $D_2$, $R_1$, $R_2$, $X_1$, m und n jeweils die zuvor angegebene Bedeutung haben.

Die Kondensationsreaktionen zwischen den Verbindungen der Formeln (19), (20) und (21) erfolgen im allgemeinen analog zu bekannten Verfahren, in der Regel in wässriger Lösung bei Temperaturen von z.B. 0 bis 50°C und einem pH-Wert von z.B. 4 bis 10.

Vorzugsweise setzt man in einem ersten Kondensationsschritt eine Verbindung der Formel (19) mit einer Verbindung der Formel (21) um und lässt anschliessend, in einem zweiten Kondensationsschritt, das erhaltene Zwischenprodukt mit einer Verbindung der Formel (20) reagieren. Statt der Verbindung der Formel (19) kann auch das entsprechende Vorprodukt der Formel (22)

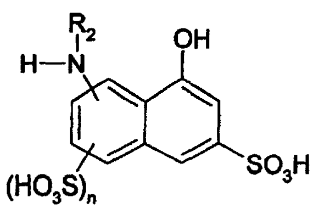

(22)

in das Verfahren eingesetzt werden und der Rest $D_2$ erst im Anschluss an den ersten Kondensationschritt durch eine entsprechende Diazotierungs- und Kupplungsreaktion eingeführt werden. Die wichtigsten Verfahrensvarianten sind in den Beispielen beschrieben.

Die Verbindungen der Formel (16), (19), (20), (21) und (22) sind bekannt oder können in an sich bekannter Weise erhalten werden.

Die erfindungsgemässen Reaktivfarbstoffe eignen sich zum Färben und Bedrucken der verschiedensten Materialien, insbesondere hydroxylgruppenhaltigen oder stickstoffhaltigen Fasermaterialien sowie Papier und Leder. Beispiele sind Seide, Wolle, Polyamidfasern und Polyurethane sowie insbesondere cellulosehaltige Fasermaterialien aller Art. Solche Fasermaterialien sind beispielsweise die natürliche Cellulosefaser, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Einen weiteren Gegenstand der vorliegenden Erfindung stellt somit die Verwendung von Verbindungen der

Formel (1a) und (1b) zum Färben oder Bedrucken von hydroxylgruppenhaltigen oder stickstoffhaltigen, insbesondere baumwollhaltigen Fasermaterialien dar.

Die erfindungsgemässen Reaktivfarbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardverfahren, können bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Reaktivfarbstoffe eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Reaktivfarbstoffen hergestellten Färbungen und Drucke besitzen eine hohe Farbstärke, eine hohe Farbbrillanz und eine hohe Faser-Farbstoff-Bindungsstabilität, sowohl in saurem als auch in alkalischem Bereich. Hervorzuheben sind weiterhin die gute Lichtechtheit und die guten Nassechtheitseigenschaften, wie Wasch-, Wasser-, Seewasser-, Überfärbe- und Schweissechtheiten. Es werden faser- und flächenegale Färbungen erhalten.

Gegenstand der vorliegenden Erfindung sind weiterhin wässrige Tinten, dadurch gekennzeichnet, dass sie einen Reaktivfarbstoff der Formel (1a) oder (1b) enthalten, wobei für die Variablen die oben angegebenen Bedeutungen und Bevorzugungen gelten.

Die in den Tinten verwendeten Farbstoffe sollten vorzugsweise salzarm sein, d.h. einen Gesamtgehalt an Salzen von weniger als 0,5 Gew.-%, bezogen auf das Gewicht der Farbstoffe, enthalten. Farbstoffe, die, bedingt durch ihre Herstellung und/oder die nachträgliche Zugabe von Coupagemitteln grössere Salzgehalte aufweisen, können z. B. durch Membrantrennverfahren, wie Ultrafiltration, Umkehrosmose oder Dialyse, entsalzt werden.

Die Tinten enthalten bevorzugt einen Gesamtgehalt an Farbstoffen von 1 bis 35 Gew.-%, insbesondere 1 bis 30 Gew.-% und vorzugsweise 1 bis 20 Gew.-%, bezogen auf das Gesamtgewicht der Tinte. Als untere Grenze ist hierbei eine Grenze von 1,5 Gew.-%, vorzugsweise 2 Gew.-% und insbesondere 3 Gew.-%, bevorzugt.

Die Tinten können mit Wasser mischbare organische Lösungsmittel enthalten, beispielsweise $C_1$-$C_4$-Alkohole, wie z.B. Methanol, Ethanol, n-Propanol, Isopropanol, n-Butanol, sec.-Butanol, tert.-Butanol oder Isobutanol; Amide, wie z.B. Dimethylformamid oder Dimethylacetamid; Ketone oder Ketonalkohole, wie z.B. Aceton, Diacetonalkohol; Ether wie z.B. Tetrahydrofuran oder Dioxan; Stickstoff enthaltende heterocyclische Verbindungen, wie z.B. N-Methyl-2-pyrrolidon oder 1,3-Dimethyl-2-imidazolidon, Polyalkylenglykole, wie z.B. Polyethylenglykol, oder Polypropylenglykol; $C_2$-$C_6$-Alkylenglykole und Thioglykole, wie z.B. Ethylenglykol, Propylenglykol, Butylenglykol, Triethylenglykol, Thiodiglykol, Hexylenglykol und Diethylenglykol; weitere Polyole, wie z.B. Glycerin oder 1,2,6-Hexantriol; und $C_1$-$C_4$-Alkylether von mehrwertigen Alkoholen, wie z.B. 2-Methoxyethanol, 2-(2-Methoxyethoxy)ethanol, 2-(2-Ethoxyethoxy)ethanol, 2-[2-(2-Methoxyethoxy)ethoxy]-ethanol oder 2-[2-(2-Ethoxyethoxy)ethoxy]ethanol; bevorzugt N-Methyl-2-pyrrolidon, Diethylenglykol, Glycerin oder insbesondere 1,2-Propylenglykol, üblicherweise in einer Menge von 2 bis 30 Gew.-%, insbesondere 5 bis 30 Gew.-% und vorzugsweise 10 bis 25 Gew.-%, bezogen auf das Gesamtgewicht der Tinte.

Weiterhin können die Tinten noch Lösungsvermittler, wie z.B. ε-Caprolactam, enthalten.

Die Tinten können, u.a. zwecks Einstellung der Viskosität, Verdickungsmittel natürlicher oder synthetischer Herkunft enthalten.

Als Beispiele für Verdickungsmittel seien handelsübliche Alginatverdickungen, Stärkeether oder Johannisbrotkernmehlether, insbesondere Natriumalginat für sich allein oder im Gemisch mit modifizierter Cellulose, wie z.B. Methyl-, Ethyl-, Carboxymethyl-, Hydroxyethyl-, Methylhydroxyethyl-, Hydroxypropyl- oder Hydroxypropylmethylcellulose, insbesondere mit vorzugsweise 20 bis 25 Gewichtsprozent Carboxymethylcellulose, genannt. Als synthetische Verdickungsmittel seien ferner z.B. solche auf Basis von Poly(meth)arylsäuren oder Poly(meth)acrylamiden genannt.

Die Tinten enthalten solche Verdickungsmittel z.B. in einer Menge von 0,01 bis 2 Gew.-%, insbesondere 0,01 bis 1 Gew.-% und vorzugsweise 0,01 bis 0,5 Gew.-%, bezogen auf das Gesamtgewicht der Tinte.

Femer können die Tinten Puffersubstanzen enthalten, wie z.B. Borax, Borat, Phosphat, Polyphosphat oder Citrat. Als Beispiele seien Borax, Natriumborat, Natriumtetraborat, Natriumdihydrogenphosphat, Dinatriumhydrogenphosphat, Natriumtripolyphosphat, Natriumpentapolyphosphat sowie Natriumcitrat genannt. Sie werden insbesondere in Mengen von 0,1 bis 3 Gew.-%, vorzugsweise 0,1 bis 1 Gew.-%, bezogen auf das Gesamtgewicht der Tinte, verwendet, um einen pH-Wert von z.B. 4 bis 9, insbesondere 5 bis 8,5, einzustellen.

Als weitere Zusätze können die Tinten Tenside oder Feuchthaltemittel enthalten.

Als Tenside kommen die handelsüblichen anionischen oder nichtionogenen Tenside in Betracht. Als Feuchthaltemittel kommen z.B. Harnstoff oder eine Mischung von Na-Lactat (vorteilhafterweise in Form einer 50 bis 60%-igen wässrigen Lösung) und Glycerin und/oder Propylenglykol in Mengen von vorzugsweise 0,1 bis 30 Gew.-%, insbesondere 2 bis 30 Gew.-%, in den erfindungsgemässen Tinten in Betracht.

Bevorzugt sind Tinten, welche eine Viskosität von 1 bis 40 mPa·s, insbesondere 1 bis 20 mPa·s und vorzugsweise 1 bis 10 mPa·s aufweisen.

Weiterhin können die Tinten noch übliche Zusätze, wie z.B. schaumdämpfende Mittel oder insbesondere das Pilz- und/oder Bakterienwachstum hemmende Stoffe, enthalten. Diese werden üblicherweise in Mengen von 0,01 bis 1 Gew.-%, bezogen auf das Gesamtgewicht der Tinte, verwendet.

Die Tinten können in üblicher Weise durch Mischen der einzelnen Bestandteile in der gewünschten Menge Wasser hergestellt werden.

Die erfindungsgemässen Tinten sind insbesondere für die Verwendung in Aufzeichnungssystemen solcher Art geeignet, bei welchen eine Tinte aus einer kleinen Öffnung in Form von Tröpfchen ausgepresst wird, welche gegen ein Substrat gerichtet werden, auf welchem ein Bild entsteht. Geeignete Substrate sind z.B. Papier, textile Fasermaterialien oder Kunststoff-Folien. Geeignete Aufzeichnungssysteme sind z.B. handelsübliche Tintenstrahldrucker für die Anwendung im Papier- oder Textildruck, oder Schreibgeräte wie Füllfederhalter oder Kugelschreiber und insbesondere Tintenstrahldrucker.

Je nach Art der Verwendung ist es gegebenenfalls erforderlich z.B. die Viskosität oder andere physikalische Eigenschaften der Tinte, insbesondere solche, die einen Einfluss auf die Affinität zum jeweiligen Substrat haben, entsprechend anzupassen.

Als Beispiele für Papier, das mit den erfindungsgemässen Tinten bedruckt werden kann seien handelsübliches Ink-Jet Papier, Photopapier, Glanzpapier, mit Kunststoff beschichtetes Papier, wie z.B. Epson Ink-Jet Paper, Epson Photo Paper, Epson Glossy Paper, Epson Glossy Film, HP Special Ink-Jet Paper, Encad Photo Gloss Paper, Ilford Photo Paper genannt. Kunststoff-Folien, die mit den erfindungsgemässen Tinten bedruckt werden können sind beispielsweise transparent oder milchig/undurchsichtig. Geeignete Kunststoff-Folien sind z.B. 3M Transparency-Film.

Als textile Fasermaterialien kommen beispielsweise stickstoffhaltige oder hydroxygruppenhaltige Fasermaterialien, wie z.B. textile Fasermaterialien aus Cellulose, Seide, Wolle oder synthetischen Polyamiden, vorzugsweise Cellulose, in Betracht.

Gegenstand der vorliegenden Erfindung ist somit auch ein Verfahren zum Bedrucken von textilen Fasermaterialien, Papier oder Kunststoff-Folien, vorzugsweise textilen Fasermaterialien oder Papier und insbesondere textilen Fasermaterialien, nach dem Tintenstrahldruck-Verfahren, dadurch gekennzeichnet, dass man eine wässrige Tinte verwendet, die einen Reaktivfarbstoff der Formel (1a) oder (1b) enthält, wobei für die Variablen die oben angegebenen Bedeutungen und Bevorzugungen gelten.

Im Falle des Tintenstrahldruck-Verfahrens werden einzelne Tropfen der Tinte kontrolliert aus einer Düse auf ein Substrat gespritzt. Ueberwiegend werden hierzu die kontinuierliche Ink-Jet-Methode sowie die Drop on demand-Methode verwendet. Im Falle der kontinuierlichen Ink-Jet-Methode werden die Tropfen kontinuierlich erzeugt, wobei nicht für den Druck benötigte Tropfen in einen Auffangbehälter abgeleitet und rezykliert werden. Im Falle der Drop on demand-Methode hingegen werden Tropfen nach Wunsch erzeugt und gedruckt; d.h. es werden nur dann Tropfen erzeugt, wenn dies für den Druck erforderlich ist. Die Erzeugung der Tropfen kann z.B. mittels eines Piezo-Inkjet-Kopfes oder mittels thermischer Energie (Bubble Jet) erfolgen. Bevorzugt ist für das erfindungsgemässe Verfahren der Druck mittels eines Piezo-Inkjet-Kopfes. Bevorzugt ist für das erfindungsgemässe Verfahren ferner der Druck nach der kontinuierlichen Ink-Jet-Methode.

Die hergestellten Aufzeichnungen, beispielsweise Drucke, zeichnen sich insbesondere durch eine hohe Farbstärke und eine hohe Farbbrillanz sowie guten Licht- und Nassechtheitseigenschaften aus.

Die nachfolgenden Beispiele dienen der Erläuterung der Erfindung. Die Temperaturen sind in Celsiusgraden angegeben, Teile sind Gewichtsteile, und Prozentangaben beziehen sich auf Gew.-%, sofern nicht anders vermerkt. Gewichtsteile stehen zu Volumenteilen im Verhältnis von Kilogramm zu Liter.

Beispiel 1: 25,6 Teile 1,3-Phenylendiamin-4-sulfonsäure werden in 200 Teilen Wasser neutral gelöst und mit 4,6 Teilen Natriumacetat versetzt. Zu dieser Lösung gibt man bei 10°C unter kräftigem Rühren 31 Teile γ-(β-Chlorethylsulfonyl)butyrylchlorid, wobei der pH der Reaktionsmischung durch gleichzeitige Zugabe einer wässrigen Natriumhydroxidlösung bei 5 gehalten wird. Anschliessend wird der pH der Reaktionsmischung auf 1,8 gestellt, der erhaltene Niederschlag abfiltriert und getrocknet. Man erhält 38,5 Teile eines Amins der Formel $D_{10}$-$NH_2$, worin $D_{10}$ einem Rest der Formel

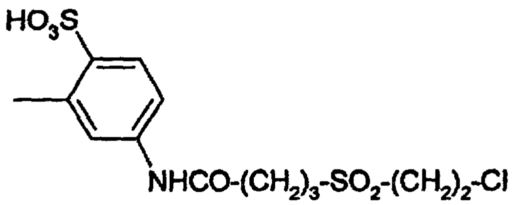

entspricht.

Beispiel 2: 38,5 Teile eines Amins der Formel $D_{10}$-$NH_2$ gemäss Beispiel 1 werden in 400 Teilen Wasser neutral gelöst und mit 25 Teilen einer 4N Natriumnitritlösung versetzt. Die erhaltene Lösung tropft man bei 0 bis 3°C auf ein Gemisch aus Eis und 25 Teilen konz. Salzsäure. Es wird 1 Stunde bei dieser Temperatur gerührt.

Beispiel 3: 26,7 Teile eines Amins der Formel $D_{11}$-$NH_2$, worin $D_{11}$ einen Rest der Formel

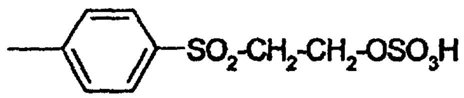

bedeutet, werden in 100 Teile Wasser eingetragen und gut verrührt. Bei 10°C gibt man zu der erhaltenen Suspension zunächst 24 Teile einer 4N Natriumnitritlösung und dann 43 Teile einer 31%igen Naphthalinsulfonsäurelösung. Anschliessend wird 3 Stunden bei 15 bis 20°C gerührt.

Beispiele 4 bis 29: Analog der in den Beispielen 2 oder 3 beschriebenen Vorgehensweise lassen sich die Diazoverbindungen der in Tabelle 1 genannten Amine herstellen, wenn man anstelle der in den Beispielen 2 oder 3 genannten Amine der Formel $D_{10}$-$NH_2$ oder $D_{11}$-$NH_2$ eine äquimolare Menge der in der Tabelle 1 genannten Amine der Formel $D_{xy}$-$NH_2$ verwendet.

Tabelle 1:

| Bsp. | Amin $D_{xy}$-$NH_2$ | $D_{xy}$ |
|---|---|---|
| 4 | $D_{12}$-$NH_2$ | $D_{12}$ = 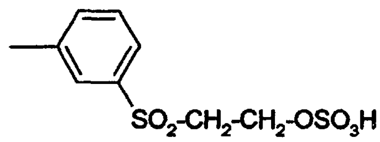 |
| 5 | $D_{13}$-$NH_2$ | $D_{13}$ = 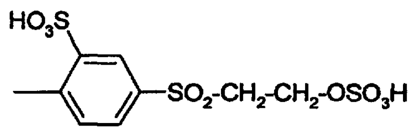 |
| 6 | $D_{14}$-$NH_2$ | $D_{14}$ = 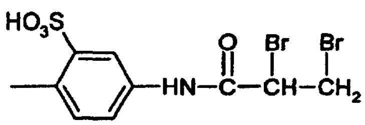 |
| 7 | $D_{15}$-$NH_2$ | $D_{15}$ = 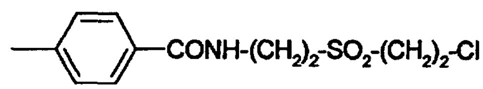 |
| 8 | $D_{16}$-$NH_2$ | $D_{16}$ = 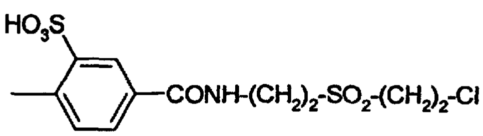 |
| 9 | $D_{17}$-$NH_2$ | $D_{17}$ = 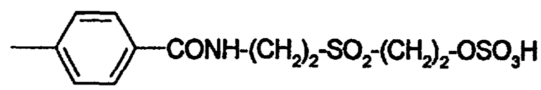 |
| 10 | $D_{18}$-$NH_2$ | $D_{18}$ = 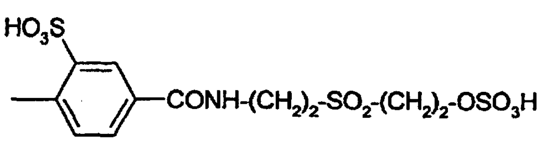 |

| | | |
|---|---|---|
| 11 | $D_{19}$-$NH_2$ | $D_{19}$ = 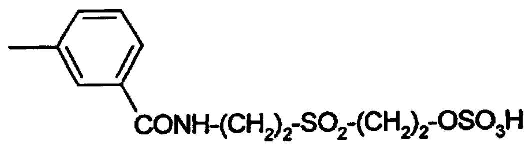 |
| 12 | $D_{20}$-$NH_2$ | $D_{20}$ = 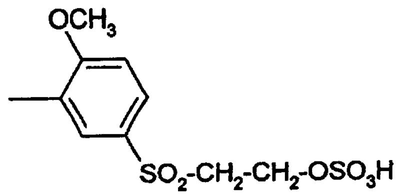 |
| 13 | $D_{21}$-$NH_2$ | $D_{21}$ = 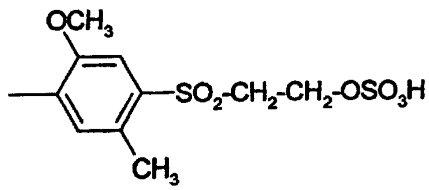 |
| 14 | $D_{22}$-$NH_2$ | $D_{22}$ = 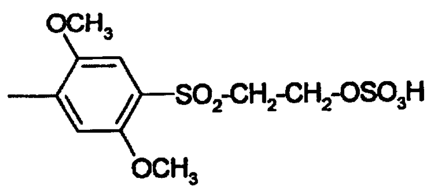 |
| 15 | $D_{23}$-$NH_2$ | $D_{23}$ = 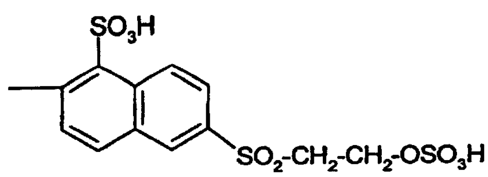 |
| 16 | $D_{24}$-$NH_2$ | $D_{24}$ = 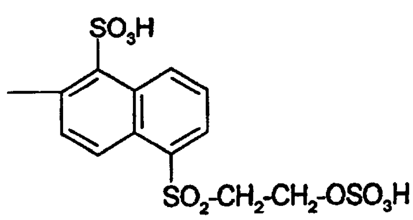 |
| 17 | $D_{25}$-$NH_2$ | $D_{25}$ = 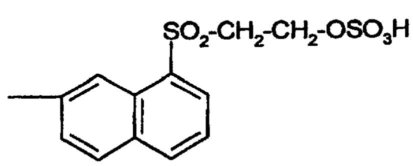 |

| | | |
|---|---|---|
| 18 | $D_{26}$-$NH_2$ | $D_{26}$ = 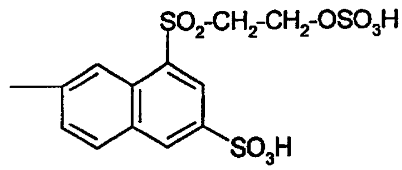 |
| 19 | $D_{27}$-$NH_2$ | $D_{27}$ = 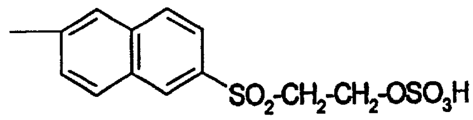 |
| 20 | $D_{28}$-$NH_2$ | $D_{28}$ = 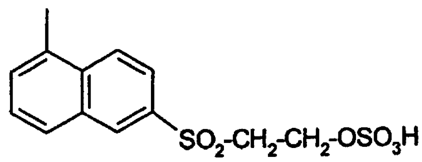 |
| 21 | $D_{29}$-$NH_2$ | $D_{29}$ = 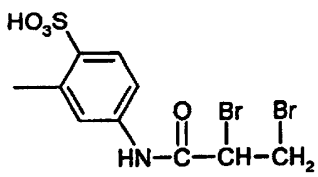 |
| 22 | $D_{30}$-$NH_2$ | $D_{30}$ = 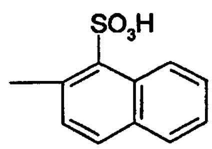 |
| 23 | $D_{31}$-$NH_2$ | $D_{31}$ = 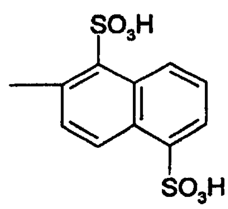 |
| 24 | $D_{32}$-$NH_2$ | $D_{32}$ = 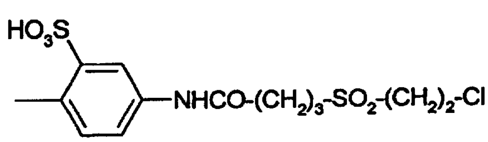 |
| 25 | $D_{33}$-$NH_2$ | $D_{33}$ = 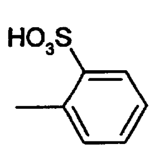 |

| | | |
|---|---|---|
| 26 | $D_{34a}$-$NH_2$ bis $D_{34q}$-$NH_2$ | $D_{34a}$ bis $D_{34q}$ = 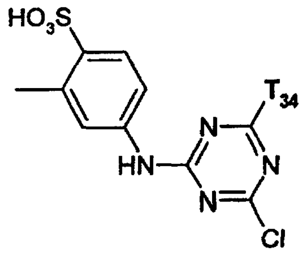 |
| | | $T_{34}$: |
| 26a | $D_{34a}$-$NH_2$ | $T_{34a}$ = 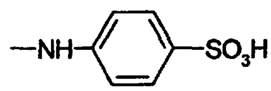 |
| 26b | $D_{34b}$-$NH_2$ | $T_{34b}$ = 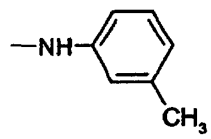 |
| 26c | $D_{34c}$-$NH_2$ | $T_{34c}$ = 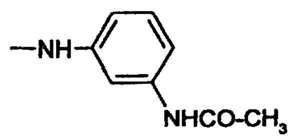 |
| 26d | $D_{34d}$-$NH_2$ | $T_{34d}$ = 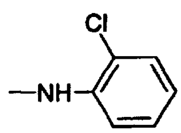 |
| 26e | $D_{34e}$-$NH_2$ | $T_{34e}$ = $-NHCH_2CH_2OH$ |
| 26f | $D_{34f}$-$NH_2$ | $T_{34f}$ = $-N(CH_2CH_2OH)_2$ |
| 26g | $D_{34g}$-$NH_2$ | $T_{34g}$ = 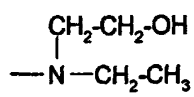 |
| 26h | $D_{34h}$-$NH_2$ | $T_{34h}$ = 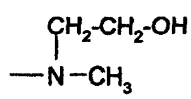 |
| 26i | $D_{34i}$-$NH_2$ | $T_{34i}$ = $-NH-(CH_2)_2-O-(CH_2)_2-OH$ |
| 26j | $D_{34j}$-$NH_2$ | $T_{34j}$ = $-NHCH_2CH_2SO_3H$ |

| | | |
|---|---|---|
| 26k | $D_{34k}$-$NH_2$ | $T_{34k}$ = 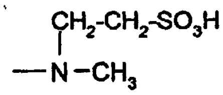 |
| 26l | $D_{34l}$-$NH_2$ | $T_{34l}$ = 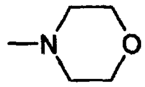 |
| 26m | $D_{34m}$-$NH_2$ | $T_{34m}$ = $-NH-(CH_2)_2-SO_2-(CH_2)_2-Cl$ |
| 26n | $D_{34n}$-$NH_2$ | $T_{34n}$ = $-NH-(CH_2)_2-O-(CH_2)_2-SO_2-(CH_2)_2-Cl$ |
| 26o | $D_{34o}$-$NH_2$ | $T_{34o}$ = 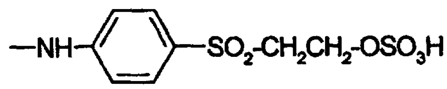 |
| 26p | $D_{34p}$-$NH_2$ | $T_{34p}$ = 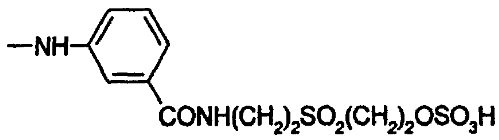 |
| 26q | $D_{34q}$-$NH_2$ | $T_{34q}$ = 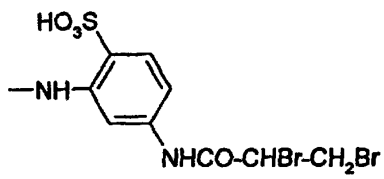 |
| 27 | $D_{35}$-$NH_2$ | $D_{35}$ = 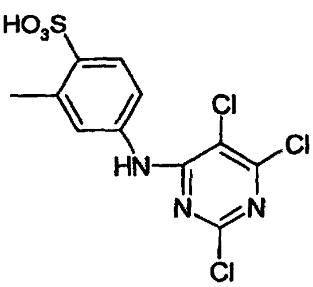 |
| 28 | $D_{36}$-$NH_2$ | $D_{36}$ = 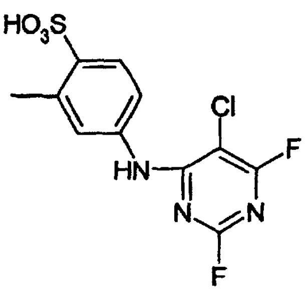 |

29 $D_{37}$-$NH_2$ $D_{37}$ = 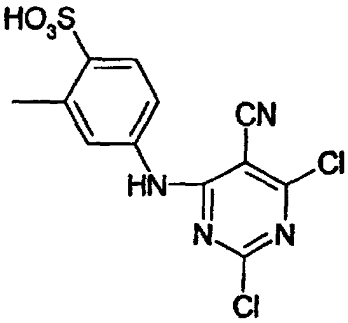

Beispiel 30:

a) 19 Teile Cyanurchlorid werden in 75 Teilen Eis und 75 Teilen Wasser unter Zugabe eines Netzmittels dispergiert. Zu dieser Dispersion gibt man eine neutrale Lösung aus 31,9 Teilen 1-Amino-8-naphthol-3,6-disulfonsäure in 350 Teilen Wasser. Nach einigen Stunden wird der pH der Reaktionsmischung durch Zugabe einer wässrigen Natriumhydroxidlösung auf 4 bis 5 gestellt.

b) Auf das in der Reaktionsmischung gemäss a) enthaltene Kondensat wird bei pH 4 bis 5 die gemäss Beispiel 3 erhaltene Diazoverbindung gekuppelt.

c) Zur erhaltenen Lösung gemäss b) gibt man portionsweise bei 10°C 27,1 Teile 1-Amino-8-napthol-3,6-disulfonsäure, wobei der pH der Reaktionsmischung durch gleichzeitige Zugabe einer wässrigen Natriumhydroxidlösung bei 4 gehalten wird. Nach etwa einer Stunde wird der pH der Reaktionsmischung durch Zugabe einer wässrigen Natriumhydroxidlösung sukzessive auf 6 gestellt, man lässt die Reaktionsmischung auf 20°C erwärmen und rührt bis zur Beendigung der Reaktion.

d) Die Suspension der Diazoverbindung gemäss Beispiel 2 wird bei 10°C und pH 7 bis 7,5 zu der gemäss c) erhaltenen Lösung gegeben. Zur Vervollständigung der Reaktion lässt man eine Stunde bei 25°C und pH 7,5 ausreagieren. Anschliessend wird die erhaltene Lösung klärfiltriert, dialytisch vom Salz befreit und gefriergetrocknet. Man erhält 140 Teile einer Verbindung, die in Form der freien Säure der Formel (101)

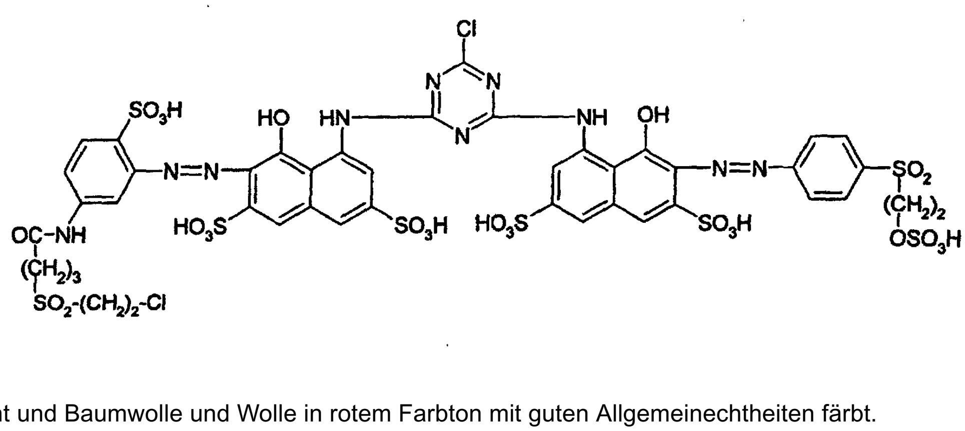 (101)

entspricht und Baumwolle und Wolle in rotem Farbton mit guten Allgemeinechtheiten färbt.

Beispiele 31 bis 73: Verfährt man wie in Beispiel 30 beschrieben, verwendet jedoch anstelle der Diazoverbindung gemäss Beispiel 3 eine äquimolare Menge einer Diazoverbindung gemäss einem der Beispiele 2 und 4 bis 33, so erhält man jeweils eine Verbindung, die in Form der freien Säure der Formel

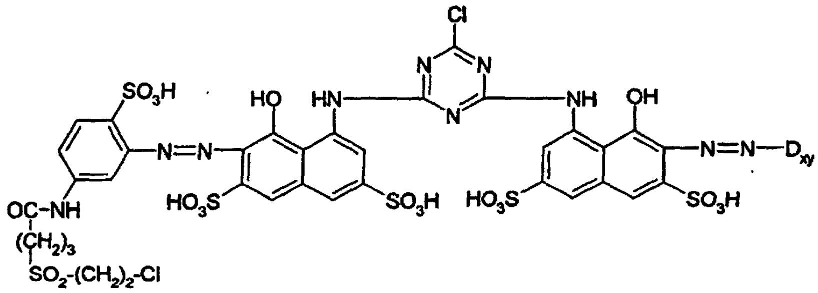

entspricht, worin $D_{xy}$ jeweils für die in Tabelle 2 aufgeführten Reste steht und diesen Resten die in Beispiel 2 und Tabelle 1 genannten Bedeutungen zukommen. Die Farbstoffe färben Baumwolle und Wolle in den jeweils angegebenen Farbtönen mit guten Allgemeinechtheiten.

Tabelle 2:

| Bsp. | $D_{xy}$ | Farbton | Bsp. | $D_{xy}$ | Farbton |
|---|---|---|---|---|---|
| 31 | $D_{10}$ | rot | 52 | $D_{32}$ | rot |
| 32 | $D_{12}$ | rot | 53 | $D_{33}$ | rot |
| 33 | $D_{13}$ | rot | 54 | $D_{34a}$ | rot |
| 34 | $D_{14}$ | rot | 55 | $D_{34b}$ | rot |
| 35 | $D_{15}$ | rot | 56 | $D_{34c}$ | rot |
| 36 | $D_{16}$ | rot | 57 | $D_{34d}$ | rot |
| 37 | $D_{17}$ | rot | 58 | $D_{34e}$ | rot |
| 38 | $D_{18}$ | rot | 59 | $D_{34f}$ | rot |
| 39 | $D_{19}$ | rot | 60 | $D_{34g}$ | rot |
| 40 | $D_{20}$ | rot | 61 | $D_{34h}$ | rot |
| 41 | $D_{21}$ | rot | 62 | $D_{34i}$ | rot |
| 42 | $D_{22}$ | rot | 63 | $D_{34j}$ | rot |
| 43 | $D_{23}$ | rot | 64 | $D_{34k}$ | rot |
| 44 | $D_{24}$ | rot | 65 | $D_{34l}$ | rot |
| 45 | $D_{25}$ | rot | 66 | $D_{34m}$ | rot |
| 46 | $D_{26}$ | rot | 67 | $D_{34n}$ | rot |
| 47 | $D_{27}$ | rot | 68 | $D_{34o}$ | rot |
| 48 | $D_{28}$ | rot | 69 | $D_{34p}$ | rot |
| 49 | $D_{29}$ | rot | 70 | $D_{34q}$ | rot |
| 50 | $D_{30}$ | rot | 71 | $D_{35}$ | rot |
| 51 | $D_{31}$ | rot | 72 | $D_{36}$ | rot |
| | | | 73 | $D_{37}$ | rot |

Beispiel 74: Verfährt man wie in Beispiel 30 beschrieben, verwendet jedoch anstelle von 27,1 Teilen 1-Amino-8-naphthol-3,6-disulfonsäure in Stufe c) eine äquimolare Menge von 2-Amino-5-naphthol-7-sulfonsäure, so erhält man eine Verbindung, die in Form der freien Säure der Formel (102)

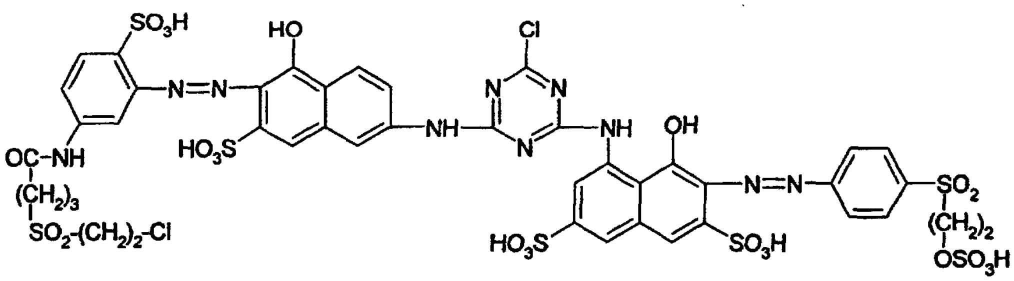

(102)

entspricht und Baumwolle und Wolle in rotem Farbton mit guten Allgemeinechtheiten färbt.

Beispiel 75: Verfährt man wie in Beispiel 30 beschrieben, verwendet jedoch anstelle von 31,9 Teilen 1-Amino-8-naphthol-3,6-disulfonsäure in Stufe a) eine äquimolare Menge von 2-N-Methylamino-5-naphthol-7-sulfonsäure, so erhält man eine Verbindung, die in Form der freien Säure der Formel (103)

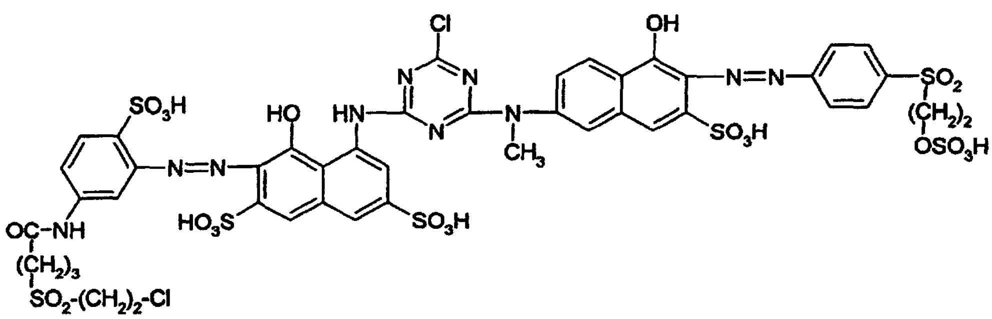

(103)

entspricht und Baumwolle und Wolle in rotem Farbton mit guten Allgemeinechtheiten färbt.

Beispiel 76: Verfährt man wie in Beispiel 30 beschrieben, verwendet jedoch anstelle der Diazoverbindung gemäss Beispiel 2 in Stufe d) eine äquimolare Menge der Diazoverbindung gemäss Beispiel 24, so erhält man eine Verbindung, die in Form der freien Säure der Formel (104)

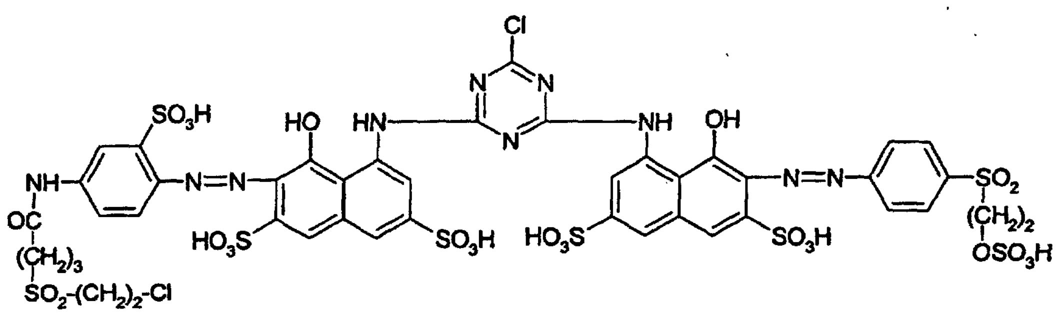

(104)

entspricht und Baumwolle und Wolle in rotem Farbton mit guten Allgemeinechtheiten färbt.

Beispiel 77: Verfährt man wie in Beispiel 30 beschrieben, verwendet jedoch anstelle von 31,9 Teilen 1-Amino-8-naphthol-3,6-disulfonsäure in Stufe a) eine äquimolare Menge von 2-N-Methylamino-5-naphthol-7-sulfonsäure und anstelle der Diazoverbindung gemäss Beispiel 2 in Stufe d) eine äquimolare Menge der Diazoverbindung gemäss Beispiel 24, so erhält man eine Verbindung, die in Form der freien Säure der Formel (105)

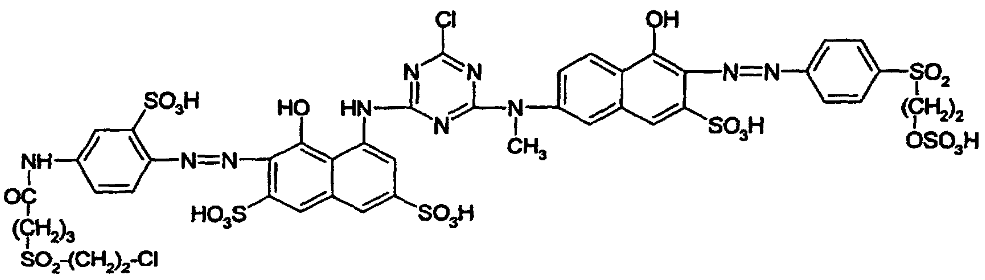

(105)

entspricht und Baumwolle und Wolle in rotem Farbton mit guten Allgemeinechtheiten färbt.

Beispiel 78:

a) 12,2 Teile eines Amins der Formel $D_{38}$-$NH_2$, worin $D_{38}$ einen Rest der Formel

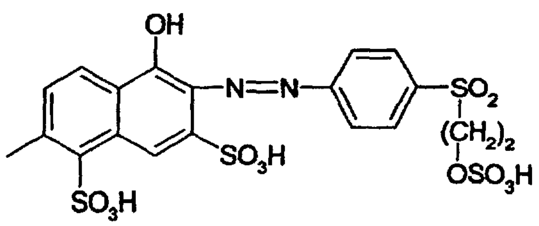

bedeutet, werden in 180 Teilen Wasser gelöst. Zu dieser Lösung gibt man bei 25°C zunächst 5 Teile einer 4N Natriumnitritlösung und dann 16 Teile einer 31%igen Naphthalinsulfonsäurelösung. Anschliessend wird zur Vervollständigung der Umsetzung einige Stunden bei 25°C gerührt.

b) Zu der gemäss a) erhaltenen Lösung der Diazoverbindung gibt man eine Lösung von 10,3 Teilen 1-[γ-(β-Chlorethylsulfonyl)butyrylamino]-8-naphthol-3,6-disulfonsäure in 50 Teilen Wasser, worauf der pH der Reaktionsmischung zunächst mit Natriumhydrogencarbonat auf 6 und dann mit Natriumcarbonat auf 8 gestellt wird. Nach Beendigung der Reaktion wird der pH mit verdünnter Salzsäure auf 6 gestellt, das Produkt durch Zusatz von Kaliumchlorid gefällt und der Niederschlag filtriert und gewaschen. Zur weiteren Reinigung wird der. Niederschlag in Wasser gelöst und durch Zusatz von Aceton gefällt. Der Niederschlag wird mit Aceton gewaschen und getrocknet. Man erhält 15,4 Teile einer Verbindung, die in Form der freien Säure der Formel (106)

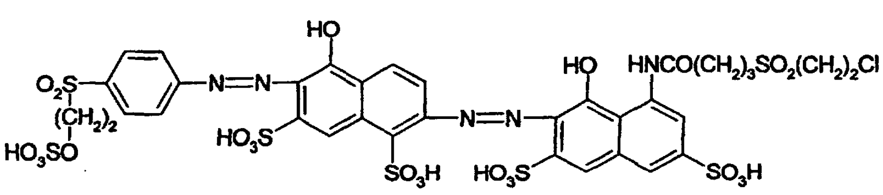

(106)

entspricht und Baumwolle und Wolle in rotem Farbton mit guten Allgemeinechtheiten färbt.

Beispiele 79 bis 102: Verfährt man wie in Beispiel 78 beschrieben, verwendet jedoch anstelle von 12,2 Teilen eines Amins der Formel $D_{38}$-$NH_2$ eine äquimolare eines Amins der Formel $D_{xy}$-$NH_2$, so erhält man eine Verbindung, die in Form der freien Säure der Formel

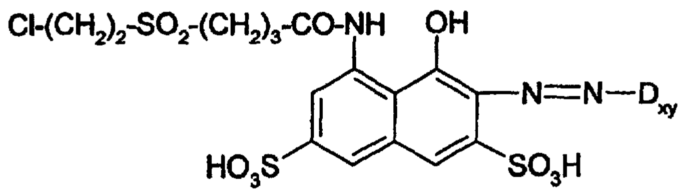

entspricht, worin $D_{xy}$ jeweils den in Tabelle 3 aufgeführten Resten entspricht. Die Farbstoffe färben Baumwolle und Wolle in den jeweils angegebenen Farbtönen mit guten Allgemeinechtheiten.

Tabelle 3:

| Bsp. | Amin $D_{xy}$-$NH_2$ | $D_{xy}$ | Farbton |
|---|---|---|---|
| 79 | $D_{47}$-$NH_2$ | $D_{47}$ = 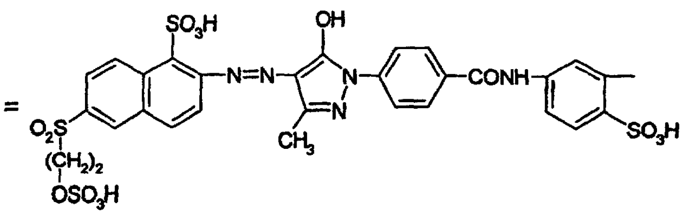 | rot |
| $D_{49}$-$NH_2$ bis $D_{70}$-$NH_2$ | | $D_{49}$ bis $D_{70}$ = 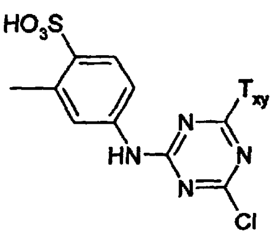 | |
| | | $T_{xy}$: | |
| 80 | $D_{49}$-$NH_2$ | $T_{49}$ = 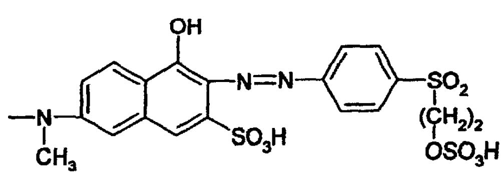 | rot |
| 81 | $D_{50}$-$NH_2$ | $T_{50}$ = 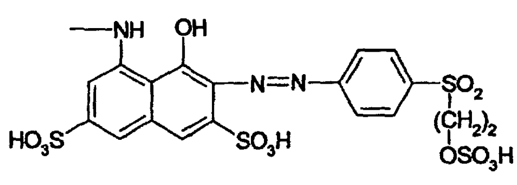 | rot |

| | | | | |
|---|---|---|---|---|
| 82 | $D_{51}$-$NH_2$ | $T_{51}$ = | 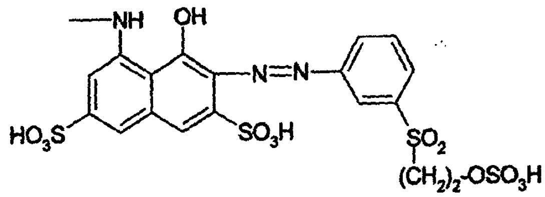 | rot |
| 83 | $D_{52}$-$NH_2$ | $T_{52}$ = | 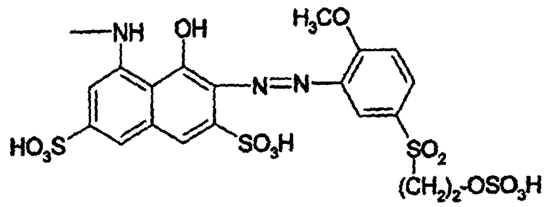 | rot |
| 84 | $D_{53}$-$NH_2$ | $T_{53}$ = | 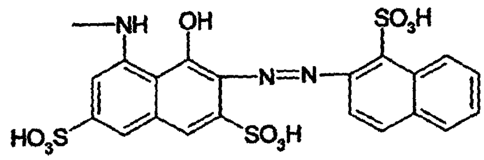 | rot |
| 85 | $D_{54}$-$NH_2$ | $T_{54}$ = | 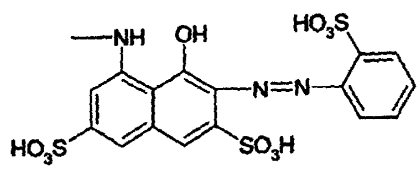 | rot |
| 86 | $D_{55}$-$NH_2$ | $T_{55}$ = | 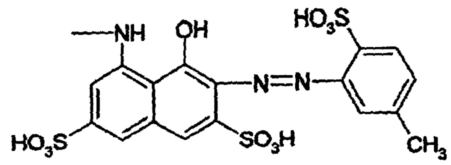 | rot |
| 87 | $D_{56}$-$NH_2$ | $T_{56}$ = | 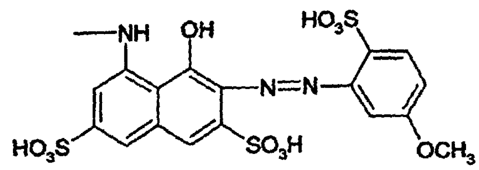 | rot |
| 88 | $D_{57}$-$NH_2$ | $T_{57}$ = | 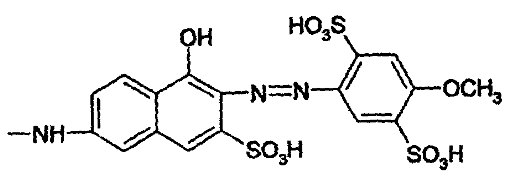 | rot |

| | | | |
|---|---|---|---|
| 89 | $D_{58}$-$NH_2$ | $T_{58}$ = 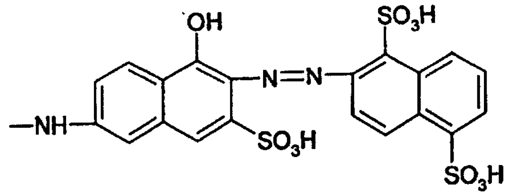 | rot |
| 90 | $D_{59}$-$NH_2$ | $T_{59}$ = 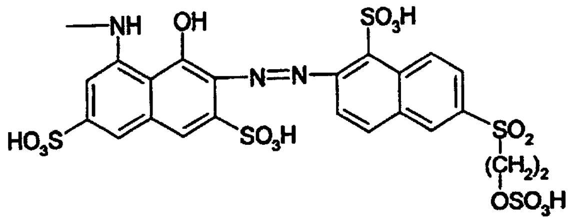 | rot |
| 91 | $D_{60}$-$NH_2$ | $T_{60}$ = 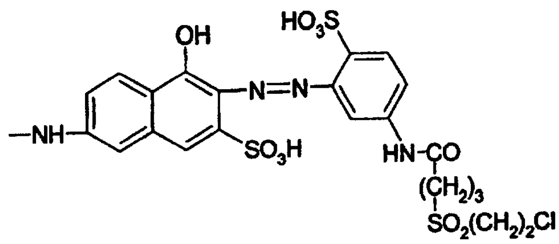 | rot |
| 92 | $D_{61}$-$NH_2$ | $T_{61}$ = 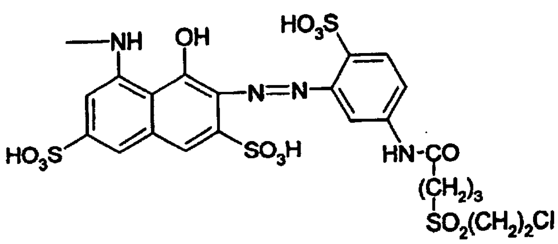 | rot |
| 93 | $D_{62}$-$NH_2$ | $T_{62}$ = 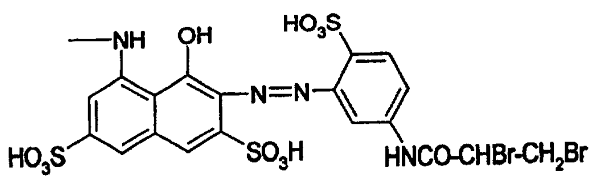 | rot |
| 94 | $D_{63}$-$NH_2$ | $T_{63}$ = 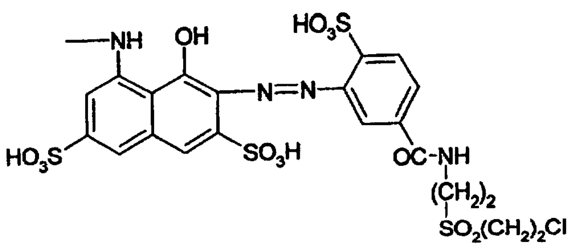 | rot |

| | | | |
|---|---|---|---|
| 95 | $D_{64}$-$NH_2$ | $T_{64}$ = 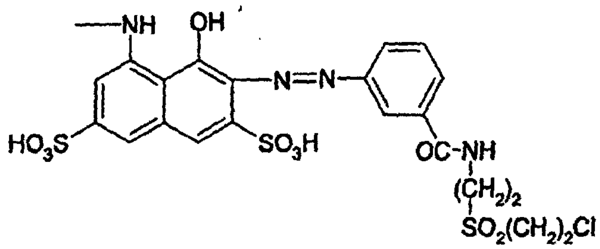 | rot |
| 96 | $D_{65}$-$NH_2$ | $T_{65}$ = 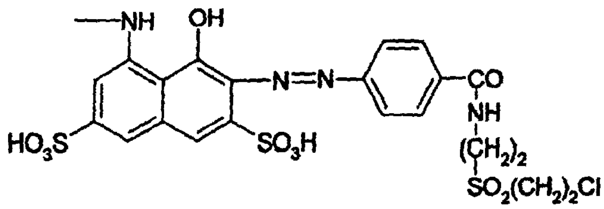 | rot |
| 97 | $D_{66}$-$NH_2$ | $T_{66}$ = 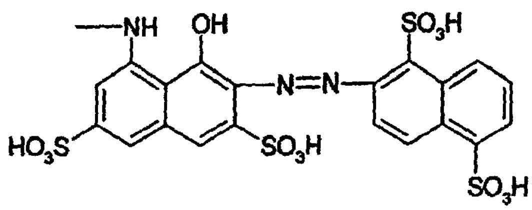 | rot |
| 98 | $D_{67}$-$NH_2$ | $T_{67}$ = 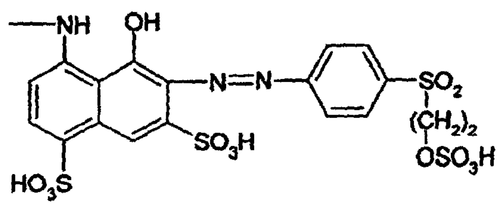 | rot |
| 99 | $D_{68}$-$NH_2$ | $T_{68}$ = 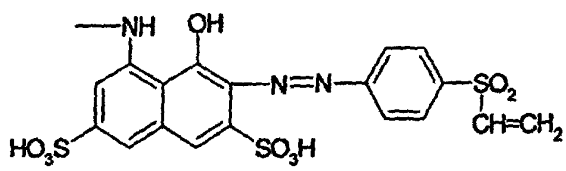 | rot |
| 100 | $D_{69}$-$NH_2$ | $T_{69}$ = 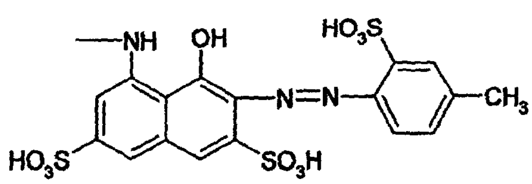 | rot |
| 101 | $D_{70}$-$NH_2$ | $T_{70}$ = 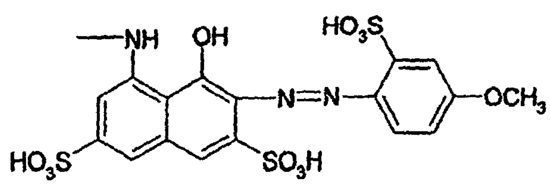 | rot |

| | | | | |
|---|---|---|---|---|
| 102 | $D_{71}$-$NH_2$ | $D_{71}$ = | 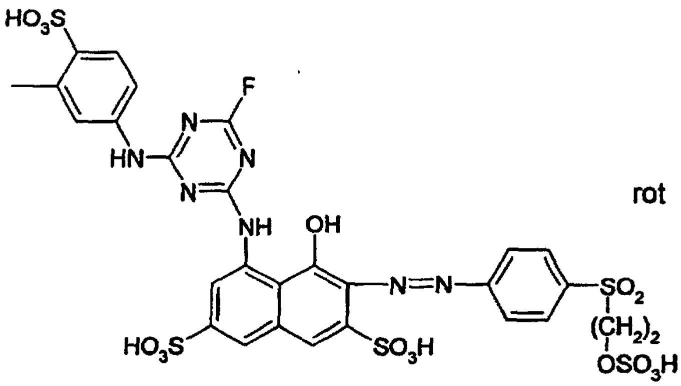 | rot |

Beispiel 103: Verfährt man wie in Beispiel 78 beschrieben, verwendet jedoch anstelle von 10,3 Teilen 1-[γ-(β-Chlorethylsulfonyl)butyrylamino]-8-naphthol-3,6-disulfonsäure eine äquimolare Menge 2-[γ-(β-Chlorethylsulfonyl)butyrylamino]-5-naphthol-1,7-disulfonsäure, so erhält man eine Verbindung, die in Form der freien Säure der Formel (107)

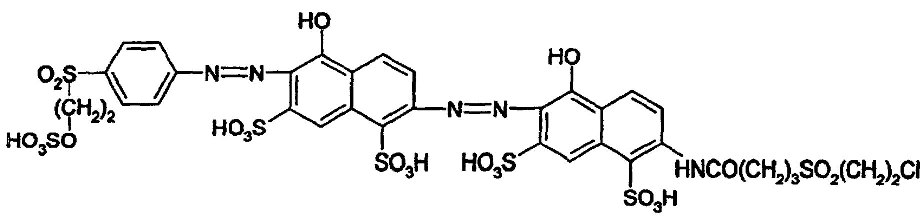 (107)

entspricht und Baumwolle und Wolle in rotem Farbton mit guten Allgemeinechtheiten färbt.

Beispiel 104: Verfährt man wie in Beispiel 78 beschrieben, verwendet jedoch anstelle von 12,2 Teilen eines Amins der Formel $D_{38}$-$NH_2$ eine äquimolare Menge eines Amins der Formel $D_{50}$-$NH_2$ und anstelle von 10,3 Teilen 1-[γ-(β-Chlorethylsulfonyl)butyrylamino]-8-naphthol-3,6-disulfonsäure eine äquimolare Menge 2-[γ-(β-Chlorethylsulfonyl)butyrylamino]-5-naphthol-1,7-disulfonsäure, so erhält man eine Verbindung, die in Form der freien Säure der Formel (108)

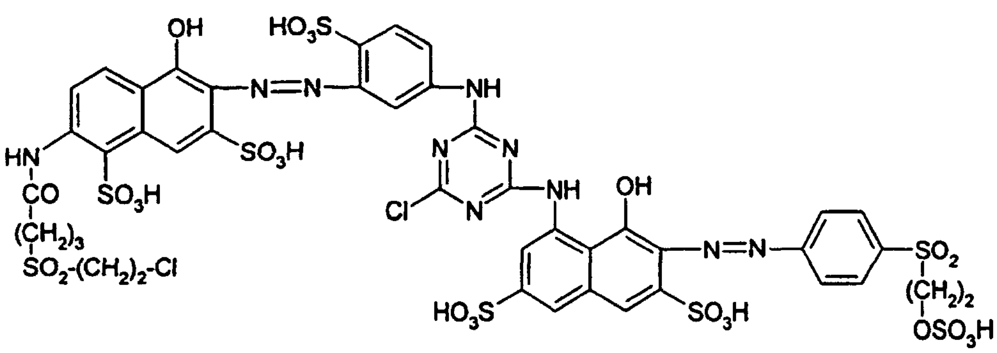 (108)

entspricht und Baumwolle und Wolle in rotem Farbton mit guten Allgemeinechtheiten färbt.

Beispiele 105 bis 107: Ebenfalls in Analogie zu der in Beispiel 78 beschriebenen Vorgehensweise lassen sich die Vebindungen herstellen, die in Form der freien Säure den Formeln (110) bis (112) entsprechen und Baumwolle und Wolle in den angegebenen Farbtönen mit guten Allgemeinechtheiten färben.

Farbton

105 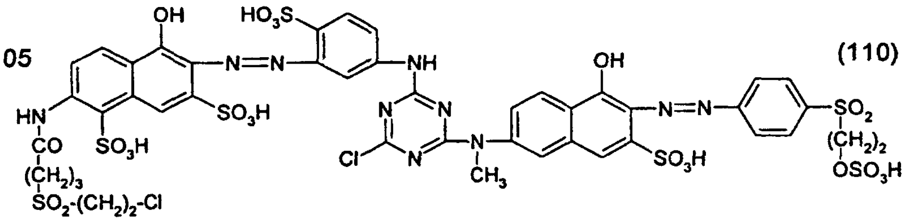 (110) orange

106 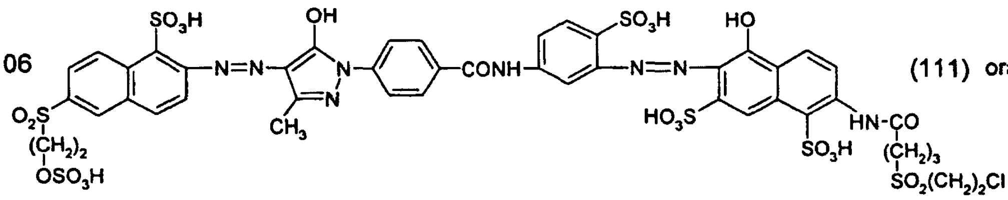 (111) orange

107 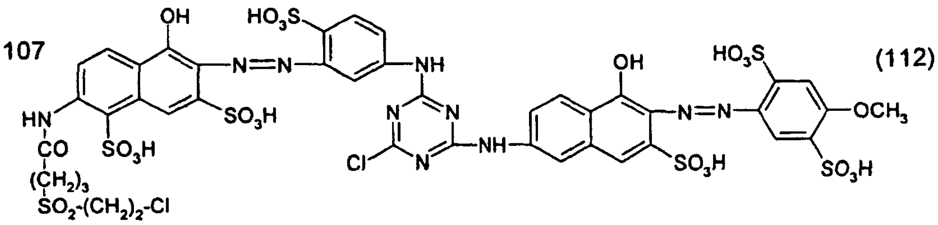 (112) orange

Färbevorschrift I

In 1500 Teile eines Färbebads, welches 45 g/l Natriumchlorid und 2 Teile des gemäss Beispiel 30 erhaltenen Reaktivfarbstoffs enthält, geht man bei 60°C mit 100 Teilen Baumwollgewebe ein. Nach 45 Minuten bei 60°C werden 20 g/l kalziniertes Soda zugegeben. Man färbt weitere 45 Minuten bei dieser Temperatur. Danach wird die gefärbte Ware gespült, während einer Viertelstunde mit einem nichtionogenen Waschmittel kochend geseift, nochmals gespült und getrocknet.

Alternativ zur angegebenen Vorschrift kann anstatt bei 60°C auch bei 80°C gefärbt werden.

Färbevorschrift II

Es werden 0,1 Teile des Farbstoffs gemäss Beispiel 30 in 200 Teilen Wasser gelöst und 0,5 Teile Natriumsulfat, 0,1 Teile eines Egalisierhilfsmittels (basierend auf dem Kondensationsprodukt aus einem höheren aliphatischen Amin und Ethylenoxid) sowie 0,5 Teile Natriumacetat zugegeben. Dann wird der pH mit Essigsäure (80%) auf einen Wert von 5,5 gestellt. Das Färbebad wird 10 Minuten auf 50°C erwärmt und es werden dann 10 Teile eines Wollgewebes zugegeben. Man erwärmt innerhalb von ca. 50 Minuten auf eine Temperatur von 100°C und färbt 60 Minuten bei dieser Temperatur. Danach lässt man auf 90°C abkühlen und entnimmt das Färbegut. Das Wollgewebe wird mit warmem und kaltem Wasser gewaschen, anschliessend geschleudert und getrocknet.

Druckvorschrift

3 Teile der gemäss Beispiel 30 erhaltenen Farbstoffs werden unter schnellem Rühren in 100 Teile einer Stammverdickung, enthaltend 50 Teile 5 %-ige Natriumalginatverdickung, 27,8 Teile Wasser, 20 Teile Harnstoff, 1 Teil m-nitrobenzolsulfon-saures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

**1.** Reaktivfarbstoffe der Formel (1a)

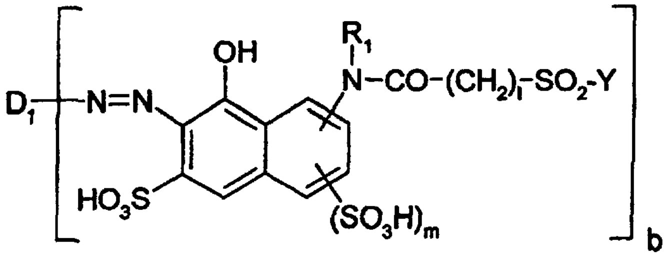

(1a),

worin

b die Zahl 1 ist,
$R_1$ Wasserstoff oder $C_1$-$C_4$-Alkyl ist,
Y Vinyl oder einen Rest $-CH_2-CH_2-U$ bedeutet und U eine alkalisch abspaltbare Gruppe ist,
l die Zahl 2, 3, 4, 5 oder 6 bedeutet,
m die Zahl 0 oder 1 ist, und
$D_1$ für den Rest der Formel

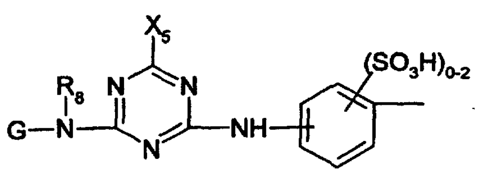

(7)

steht, worin
$R_8$ Wasserstoff oder $C_1$-$C_4$-Alkyl ist,
$X_5$ Fluor oder Chlor bedeutet, und
G für einen Monoazo- oder Disazorest der Formel (8) oder (9)

$$D\text{-}N{=}N\text{-}(M\text{-}N{=}N)_u\text{-}K\text{-} \quad (8)$$

oder

$$\text{-}D\text{-}N{=}N\text{-}(M\text{-}N{=}N)_u\text{-}K \quad (9)$$

steht, worin
D der Rest einer Diazokomponente der Benzol- oder Naphthalinreihe ist,
M den Rest einer Mittelkomponente der Benzol- oder Naphthalinreihe bedeutet,
K der Rest einer Kupplungskomponente der Benzol-, Naphthalin-, Pyrazolon-, 6-Hydroxypyridon-(2)- oder Acetessigsäurearylamid-Reihe ist, und
u die Zahl 0 oder 1 ist, wobei D, M und K bei Azofarbstoffen übliche Substituenten tragen können, oder
$D_1$ für den Rest der Formel (10a), (10b), (10d), (10e), (10f), (11a), (11b), (11c), (11d), (11e) oder (11f)

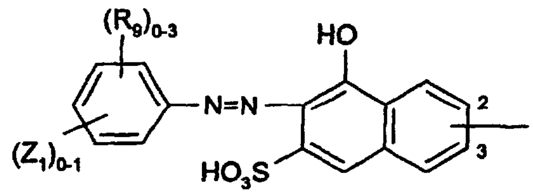

(10a),

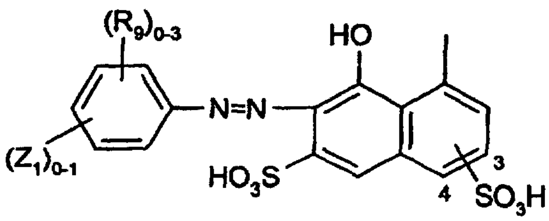

(10b),

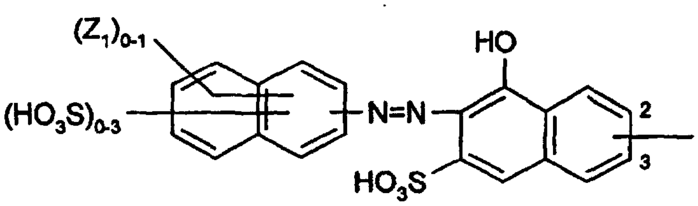

(10d),

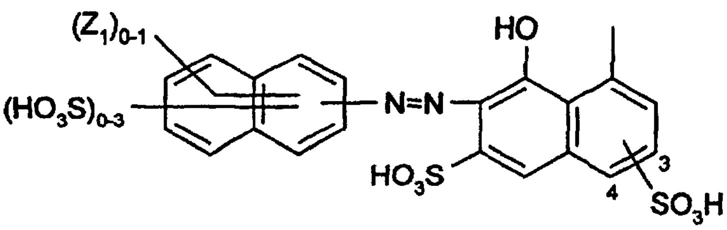

(10e),

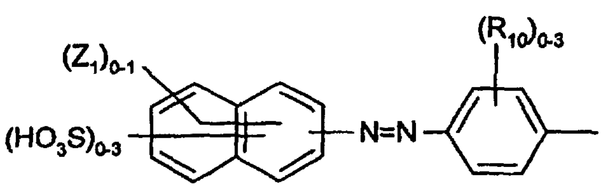

(10f),

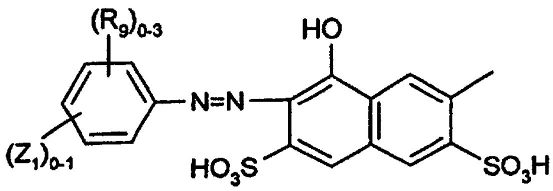

(11a),

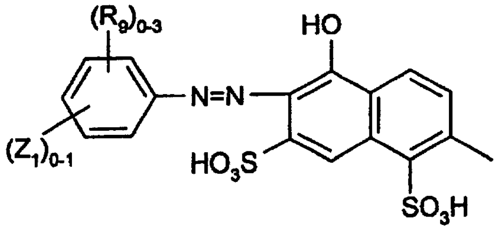

(11b),

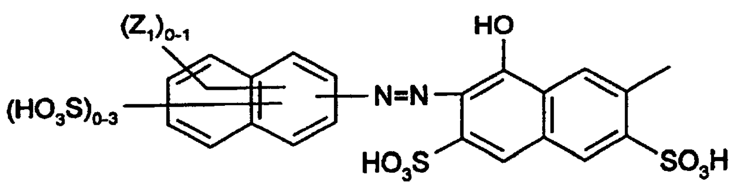

(11c),

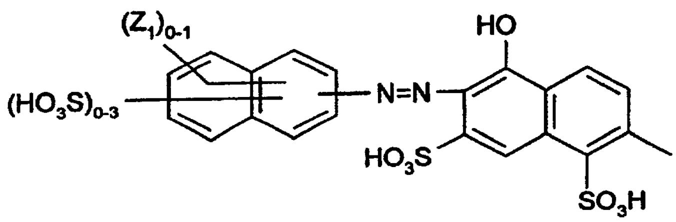

(11d),

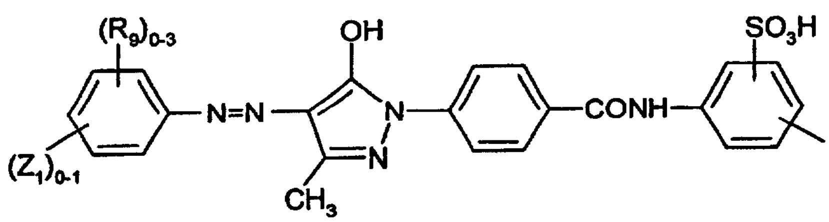

(11e)

oder

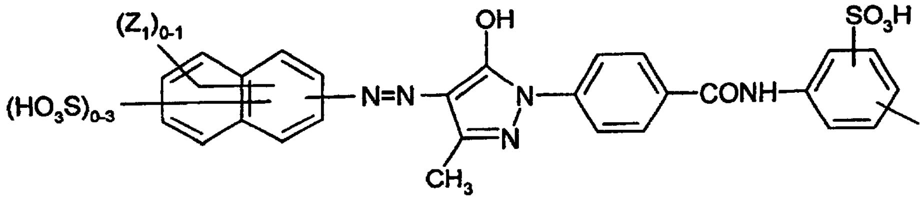

(11f)

steht, worin

$(R_9)_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht,

$(R_{10})_{0-3}$ für 0 bis 3 gleiche oder verschiedene Substituenten aus der Gruppe Halogen, Nitro, Cyan, Trifluormethyl, Sulfamoyl, Carbamoyl, $C_1$-$C_4$-Alkyl, gegebenenfalls durch Hydroxy, Sulfato oder $C_1$-$C_4$-Alkoxy substituiertes $C_1$-$C_4$-Alkoxy, Amino, $C_2$-$C_4$-Alkanoylamino, Ureido, Hydroxy, Carboxy, Sulfomethyl, $C_1$-$C_4$-Alkylsulfonylamino und Sulfo steht, und

$Z_1$ gegebenenfalls einen Rest der Formel (2a), (5a), (5b), (5c), (5d) oder (5e)

$$-NH-CO-(CH_2)_l-SO_2-Y \quad (2a),$$

$$-SO_2-Y \quad (5a),$$

$$-CO-NH-(CH_2)_k-SO_2-Y \quad (5b),$$

$$-NH-CO-CH(Hal)-CH_2-Hal \quad (5c),$$

$$-NH-CO-C(Hal)=CH_2 \quad (5d)$$

oder

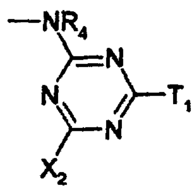

(5e),

bedeutet, worin

Hal Chlor oder Brom ist;

$X_2$ Halogen, 3-Carboxypyridin-1-yl oder 3-Carbamoylpyridin-1-yl bedeutet;

$T_1$ unabhängig die Bedeutung von $X_2$ hat, für einen nicht-faserreaktiven Substituenten oder für einen faserreaktiven Rest der Formel (6a), (6b), (6c), (6d), (6e) oder (6f)

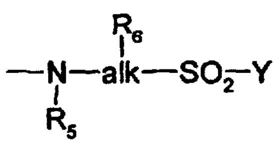

(6a),

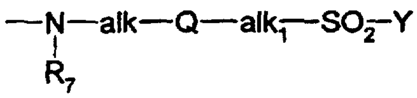

(6b),

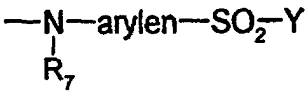

(6c),

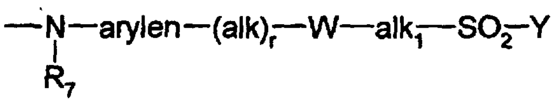

(6d),

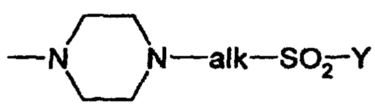

(6e)

oder

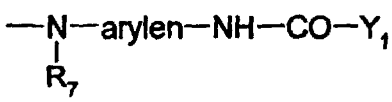

(6f)

steht, worin
$R_4$ und $R_7$ unabhängig voneinander die gleichen Bedeutungen wie $R_1$ haben,
$R_5$ Wasserstoff, gegebenenfalls durch Hydroxy, Sulfo, Sulfato, Carboxy oder Cyano substituiertes $C_1$-$C_4$-Alkyl oder einen Rest

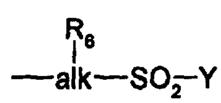

bedeutet,
$R_6$ Wasserstoff, Hydroxy, Sulfo, Sulfato, Carboxy, Cyano, Halogen, $C_1$-$C_4$-Alkoxycarbonyl, $C_1$-$C_4$-Alkanoyloxy, Carbamoyl oder die Gruppe $-SO_2$-Y ist,
alk und $alk_1$ unabhängig voneinander lineares oder verzweigtes $C_1$-$C_6$-Alkylen sind,
arylen einen unsubstituierten oder durch Sulfo, Carboxy, $C_1$-$C_4$-Alkyl, $C_1$-$C_4$-Alkoxy oder Halogen substituierten Phenylen- oder Naphthylenrest bedeutet,
Q ein Rest -O- oder $-NR_7$-, worin $R_7$ die oben angegebene Bedeutung hat, ist,
W für eine Gruppe $-SO_2-NR_5$-, $-CONR_5$- oder $-NR_5CO$- steht, worin $R_5$ die oben angegebene Bedeutung hat,
Y die oben angegebenen Bedeutungen hat,
$Y_1$ für eine Gruppe $-CH(Hal)-CH_2$-Hal oder $-C(Hal)=CH_2$ steht und Hal Chlor oder Brom bedeutet,
l die oben angegebenen Bedeutungen hat, und

k die Zahl 2, 3, 4, 5 oder 6 und r die Zahl 0 oder 1 sind.

**2.** Reaktivfarbstoffe der Formel (1b)

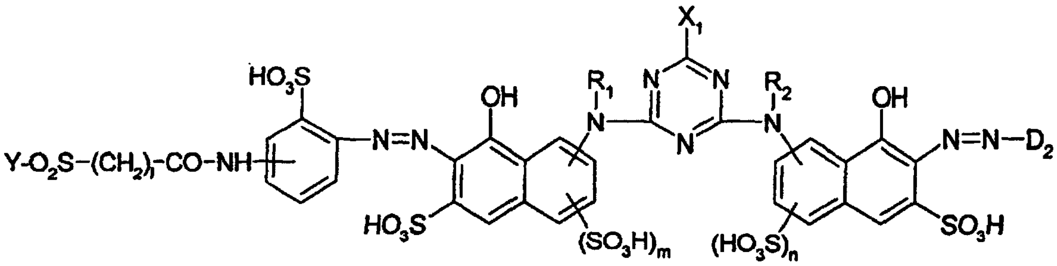

(1b),

worin

$D_2$ für den Rest einer Diazokomponente der Benzol- oder Naphthalinreihe steht,
$R_1$ und $R_2$ unabhängig voneinander Wasserstoff oder $C_1$-$C_4$-Alkyl sind,
$X_1$ Fluor oder Chlor ist,
Y Vinyl oder einen Rest -$CH_2$-$CH_2$-U bedeutet und U eine alkalisch abspaltbare Gruppe ist,
l die Zahl 2, 3, 4, 5 oder 6 bedeutet, und
m und n unabhängig voneinander die Zahl 0 oder 1 sind.

**3.** Reaktivfarbstoffe gemäss Anspruch 1, **dadurch gekennzeichnet, dass**

$D_1$ als Rest eines Azofarbstoffs einen Rest der Formel (7) bedeutet, worin
$X_5$ Fluor oder Chlor ist,
$R_8$ Wasserstoff oder $C_1$-$C_4$-Alkyl bedeutet, und
G für einen Monoazorest der Formel (10a), (10b), (10d) oder (10e) gemäss Anspruch 1 steht, worin
$(R_9)_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht, und
$Z_1$ gegebenenfalls einen Rest der Formel (2a), (5a), (5b), (5c), (5d) oder (5e) gemäss Anspruch 1 bedeutet, worin
$R_4$ für Wasserstoff steht,
Hal Brom ist,
$X_2$ Chlor oder Fluor bedeutet,
Y Vinyl, β-Chlorethyl oder β-Sulfatoethyl ist,
$T_1$ für $C_1$-$C_4$-Alkoxy, $C_1$-$C_4$-Alkylthio, Hydroxy, Amino, gegebenenfalls im Alkylteil durch Hydroxy, Sulfato oder Sulfo substituiertes N-Mono- oder N,N-Di-$C_1$-$C_4$-Alkylamino, Morpholino, gegebenenfalls im Phenylring durch Sulfo, Carboxy, Acetylamino, Chlor, Methyl oder Methoxy substituiertes Phenylamino oder N-$C_1$-$C_4$-Alkyl-N-phenylamino, worin das Alkyl gegebenenfalls durch Hydroxy, Sulfo oder Sulfato substituiert ist, gegebenenfalls durch 1 bis 3 Sulfogruppen substituiertes Naphthylamino, oder für einen faserreaktiven Rest der Formel (6c') oder (6d')

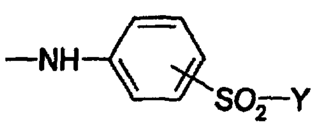

(6c')

oder

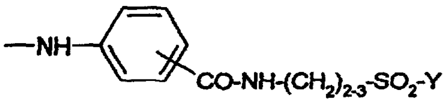

(6d')

steht, worin Y die oben angegebene Bedeutung hat, k die Zahl 2 oder 3 ist und l die Zahl 3 oder 4 bedeutet; oder $D_1$ ein Rest der Formel (10a), (10b), (11a), (11b) oder (11f) gemäss Anspruch 1 ist,

worin für $(R_9)_{0-3}$ und $Z_1$ die oben angegebenen Bedeutungen gelten.

**4.** Reaktivfarbstoffe gemäss Anspruch 2, **dadurch gekennzeichnet, dass**

$D_2$ ein Rest der Formel (15)

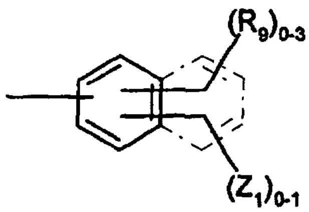

(15)

ist, worin $(R_9)_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht, und $Z_1$ gegebenenfalls einen Rest der Formel (2a), (5a), (5b), (5c), (5d) oder (5e)

$$-NH-CO-(CH_2)_l-SO_2-Y \quad (2a),$$

$$-SO_2-Y \quad (5a),$$

$$-CO-NH-(CH_2)_k-SO_2-Y \quad (5b),$$

$$-NH-CO-CH(Hal)-CH_2-Hal \quad (5c),$$

$$-NH-CO-C(Hal)=CH_2 \quad (5d)$$

oder

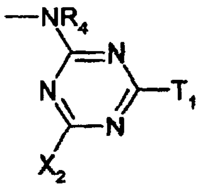

(5e)

bedeutet, worin
$R_4$ für Wasserstoff steht,
Hal Brom ist,
$X_2$ Chlor oder Fluor bedeutet,
Y Vinyl, β-Chlorethyl oder β-Sulfatoethyl ist,
$T_1$ für $C_1$-$C_4$-Alkoxy, $C_1$-$C_4$-Alkylthio, Hydroxy, Amino, gegebenenfalls im Alkylteil durch Hydroxy, Sulfato oder Sulfo substituiertes N-Mono- oder N,N-Di-$C_1$-$C_4$-Alkylamino, Morpholino, gegebenenfalls im Phenylring durch Sulfo, Carboxy, Acetylamino. Chlor, Methyl oder Methoxy substituiertes Phenylamino oder N-$C_1$-$C_4$-Alkyl-N-phenylamino, worin das Alkyl gegebenenfalls durch Hydroxy, Sulfo oder Sulfato substituiert ist, gegebenenfalls durch 1 bis 3 Sulfogruppen substituiertes Naphthylamino, oder für einen faserreaktiven Rest der Formel (6c') oder (6d')

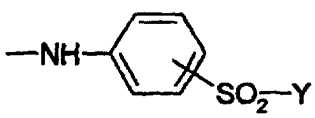

(6c')

oder

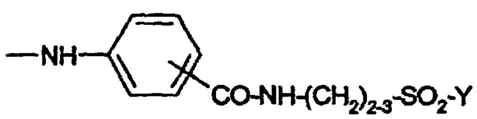

(6d')

steht und Y die oben angegebene Bedeutung hat,
k die Zahl 2 oder 3 ist und
l die Zahl 3 oder 4 bedeutet.

**5.** Reaktivfarbstoffe gemäss einem der Ansprüche 2 und 4, **dadurch gekennzeichnet, dass** $D_2$ einen Rest der Formel (15a), (15b), (15c), (15d) oder (15e)

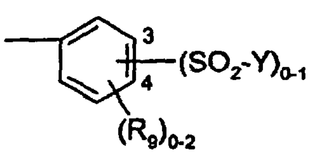

(15a),

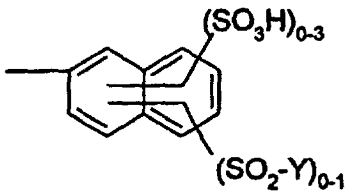

(15b),

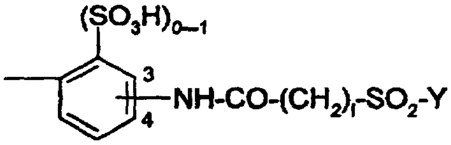

(15c),

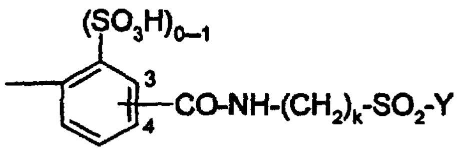

(15d)

oder

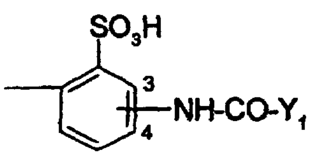

(15e)

bedeutet, worin

$(R_9)_{0-2}$ für 0 bis 2 gleiche oder voneinander verschiedene Substituenten ausgewählt aus der Gruppe Halogen, $C_1$-$C_4$-Alkyl, $C_1$-$C_4$-Alkoxy und Sulfo steht,
$Y_1$ für eine Gruppe $-CH(Br)-CH_2-Br$ oder $-C(Br)=CH_2$ steht,
Y Vinyl, β-Chlorethyl oder β-Sulfatoethyl ist,
k für die Zahl 2 oder 3 steht und
l die Zahl 3 oder 4 bedeutet.

**6.** Verwendung von Reaktivfarbstoffen gemäss einem der Ansprüche 1 bis 5 zum Färben oder Bedrucken von hydroxylgruppenhaltigen oder stickstoffhaltigen Fasermaterialien.

**7.** Verwendung gemäss Anspruch 6, **dadurch gekennzeichnet, dass** man cellulosehaltige Fasermaterialien, insbesondere baumwollhaltige Fasermaterialien, färbt oder bedruckt.

**8.** Wässrige Tinten, **dadurch gekennzeichnet, dass** sie
einen Reaktivfarbstoff der Formel (1a) gemäss Anspruch 1 oder einen Reaktivfarbstoff der Formel (1b) gemäss Anspruch 2 enthalten.

**9.** Verfahren zum Bedrucken von textilen Fasermaterialien, Papier oder Kunststoff-Folien nach dem Tintenstrahldruck-Verfahren, **dadurch gekennzeichnet, dass** man eine wässrige Tinte gemäss Anspruch 8 verwendet.

## Claims

1. A reactive dye of formula (1a)

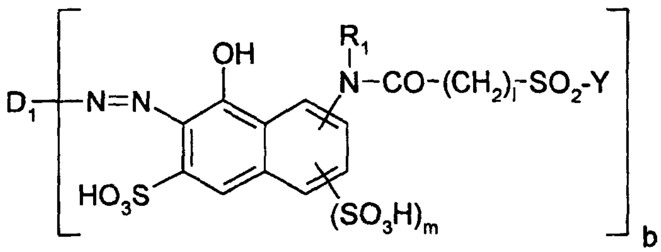

(1a)

wherein

b is the number 1,
$R_1$ is hydrogen or $C_1$-$C_4$alkyl,
Y is vinyl or a radical $-CH_2-CH_2-U$ and U is a group removable under alkaline conditions,
l is the number 2, 3, 4, 5 or 6,
m is the number 0 or 1, and
$D_1$ is a radical of formula

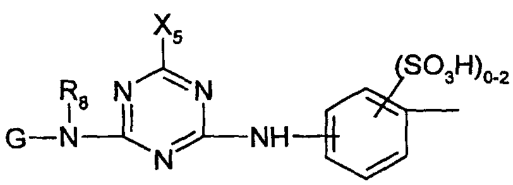

(7)

wherein
$R_8$ is hydrogen or $C_1$-$C_4$alkyl,
$X_5$ is fluorine or chlorine, and
G is a monoazo or disazo radical of formula (8) or (9)

$$D\text{-}N{=}N\text{-}(M\text{-}N{=}N)_u\text{-}K\text{-} \quad (8)$$

or

$$\text{-}D\text{-}N{=}N\text{-}(M\text{-}N{=}N)_u\text{-}K \quad (9),$$

wherein
D is the radical of a diazo component, of the benzene or naphthalene series,
M is the radical of a central component, of the benzene or naphthalene series,
K is the radical of a coupling component, of the benzene, naphthalene, pyrazolone, 6-hydroxypyrid-2-one or acetoacetic acid arylamide series, and
u is the number 0 or 1, it being possible for D, M and K to carry substituents customary for azo dyes, or
$D_1$ is a radical of formula (10a), (10b), (10d), (10e), (10f), (11a), (11b), (11c), (11d), (11e) or (11f)

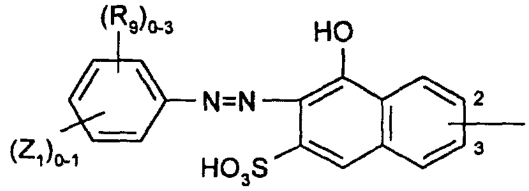

(10a),

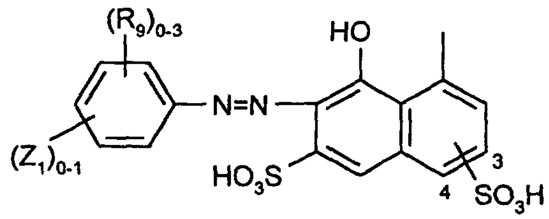

(10b),

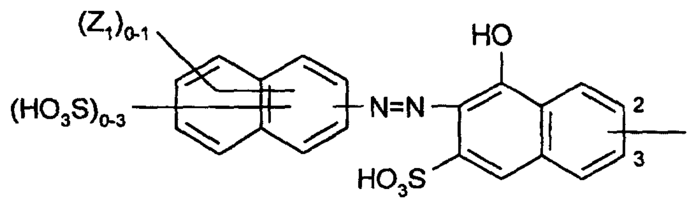

(10d),

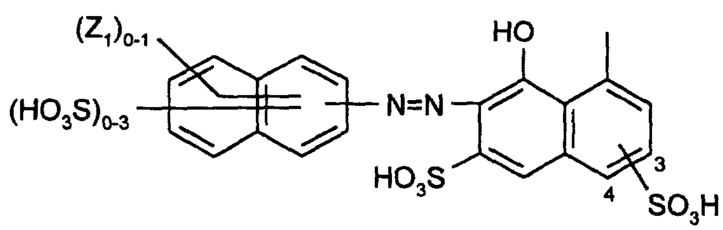

(10e),

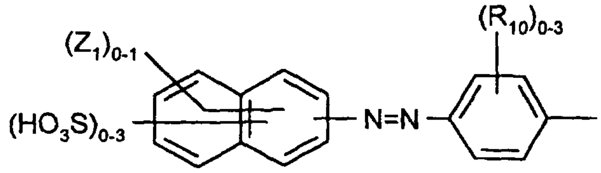

(10f),

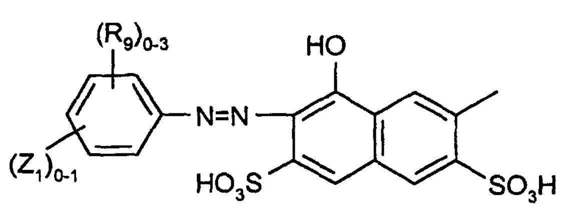

(11a),

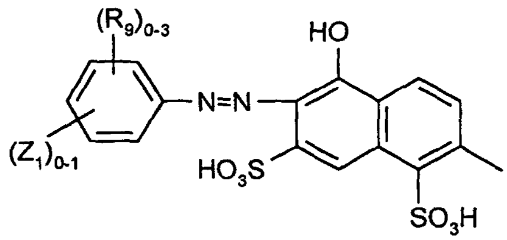

(11b),

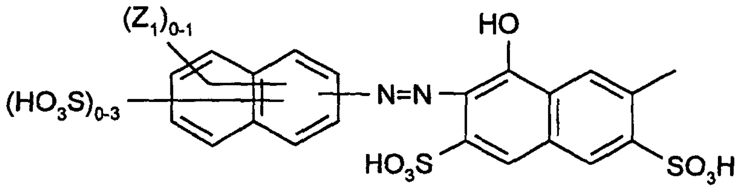

(11c),

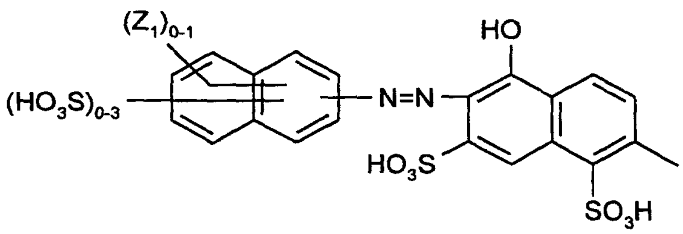

(11d),

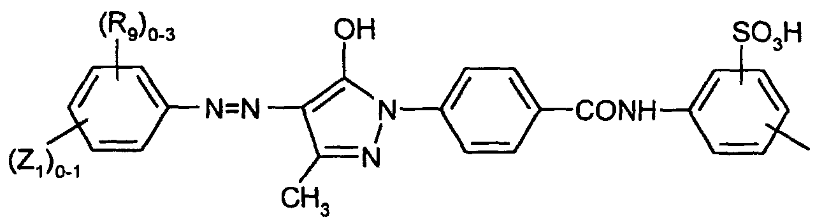

(11e)

or

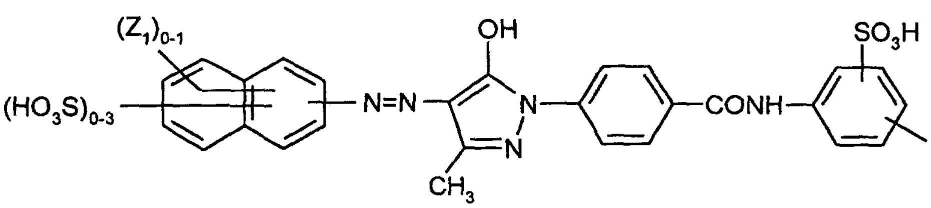

(11f)

wherein $(R_9)_{0-3}$ denotes from 0 to 3 identical or different substituents from the group $C_1$-$C_4$alkyl, $C_1$-$C_4$alkoxy, halogen, carboxy and sulfo,

$(R_{10})_{0-3}$ denotes from 0 to 3 identical or different substituents from the group halogen, nitro, cyano, trifluoromethyl, sulfamoyl, carbamoyl, $C_1$-$C_4$alkyl, $C_1$-$C_4$alkoxy unsubstituted or substituted by hydroxy, sulfato or by $C_1$-$C_4$alkoxy, amino, $C_2$-$C_4$alkanoylamino, ureido, hydroxy, carboxy, sulfomethyl, $C_1$-$C_4$alkylsulfonylamino and sulfo, and $Z_1$, where present, is a radical of formula (2a), (5a), (5b), (5c), (5d) or (5e)

$$-NH-CO-(CH_2)_l-SO_2-Y \quad (2a),$$

$$-SO_2-Y \quad (5a),$$

$$-CO-NH-(CH_2)_k-SO_2-Y \quad (5b),$$

$$-NH-CO-CH(Hal)-CH_2-Hal \quad (5c),$$

$$-NH-CO-C(Hal)=CH_2 \quad (5d)$$

or

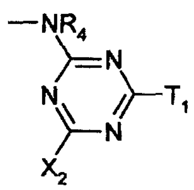

(5e)

wherein

Hal is chlorine or bromine;
$X_2$ is halogen, 3-carboxypyridin-1-yl or 3-carbamoylpyridin-1-yl;
$T_1$ has independently the same definitions as $X_2$, or is a non-fibre-reactive substituent or a fibre-reactive radical of formula (6a), (6b), (6c), (6d), (6e) or (6f)

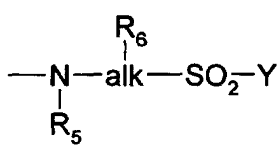

(6a),

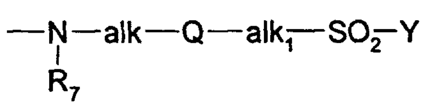

(6b),

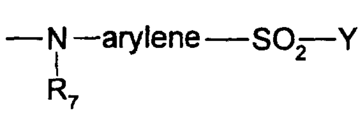

(6c),

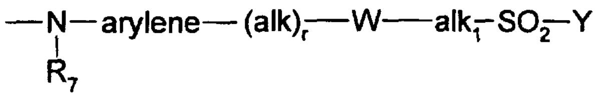 (6d),

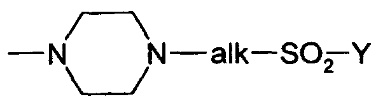 (6e)

or

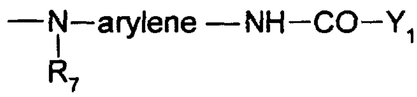 (6f)

wherein

$R_4$ and $R_7$ each independently of the other have the same definitions as $R_1$,

$R_5$ is hydrogen, $C_1$-$C_4$alkyl unsubstituted or substituted by hydroxy, sulfo, sulfato, carboxy or by cyano, or a radical

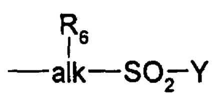 ,

$R_6$ is hydrogen, hydroxy, sulfo, sulfato, carboxy, cyano, halogen, $C_1$-$C_4$alkoxycarbonyl, $C_1$-$C_4$alkanoyloxy, carbamoyl or a group $-SO_2$-Y,

alk and $alk_1$ are each independently of the other linear or branched $C_1$-$C_6$alkylene, arylene is a phenylene or naphthylene radical unsubstituted or substituted by sulfo, carboxy, $C_1$-$C_4$alkyl, $C_1$-$C_4$alkoxy or by halogen,

Q is a radical -O- or $-NR_7$- wherein $R_7$ is as defined above,

W is a group $-SO_2-NR_5$-, $-CONR_5$- or $-NR_5CO$- wherein $R_5$ is as defined above,

Y is as defined above,

$Y_1$ is a group $-CH(Hal)-CH_2$-Hal or $-C(Hal)=CH_2$ and Hal is chlorine or bromine,

l is as defined above, and

k is the number 2, 3, 4, 5 or 6 and r is the number 0 or 1.

**2.** A reactive dye of formula (1b)

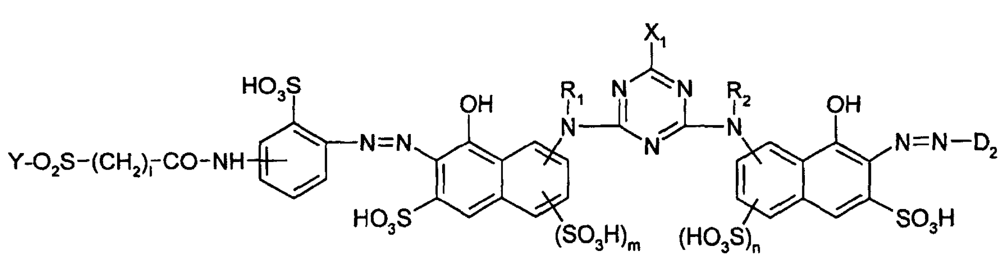 (1b)

wherein

$D_2$ is the radical of a diazo component, of the benzene or naphthalene series,
$R_1$ and $R_2$ are each independently of the other hydrogen or $C_1$-$C_4$alkyl,
X, is fluorine or chlorine,
Y is vinyl or a radical $-CH_2-CH_2-U$ and U is a group removable under alkaline conditions,
I is the number 2, 3, 4, 5 or 6, and
m and n are each independently of the other the number 0 or 1.

**3.** A reactive dye according to claim 1, wherein

$D_1$ as the radical of an azo dye is a radical of formula (7) wherein
$X_5$ is fluorine or chlorine,
$R_8$ is hydrogen or $C_1$-$C_4$alkyl, and
G is a monoazo radical of formula (10a), (10b), (10d) or (10e) according to claim 1 wherein $(R_9)_{0-3}$ denotes from 0 to 3 identical or different substituents from the group $C_1$-$C_4$alkyl, $C_1$-$C_4$alkoxy, halogen, carboxy and sulfo, and
$Z_1$, where present, is a radical of formula (2a), (5a), (5b), (5c), (5d) or (5e) according to claim 1, wherein
$R_4$ is hydrogen,
Hal is bromine,
$X_2$ is chlorine or fluorine,
Y is vinyl, β-chloroethyl or β-sulfatoethyl,
$T_1$ is $C_1$-$C_4$alkoxy, $C_1$-$C_4$alkylthio, hydroxy, amino, N-mono- or N,N-di-$C_1$-$C_4$alkylamino unsubstituted or substituted in the alkyl moiety by hydroxy, sulfato or by sulfo, morpholino, or phenylamino or N-$C_1$-$C_4$alkyl-N-phenylamino (wherein the alkyl is unsubstituted or substituted by hydroxy, sulfo or by sulfato) each unsubstituted or substituted in the phenyl ring by sulfo, carboxy, acetylamino, chlorine, methyl or by methoxy, or naphthylamino unsubstituted or substituted by from 1 to 3 sulfo groups, or is a fibre-reactive radical of formula (6c') or (6d')

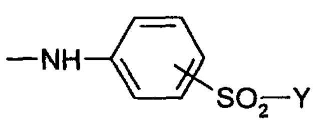

(6c')

or

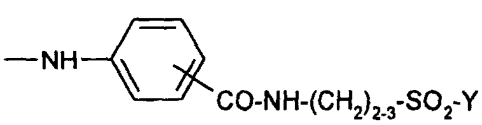

(6d')

wherein Y is as defined above,
k is the number 2 or 3, and
I is the number 3 or 4;
or $D_1$ is a radical of formula (10a), (10b), (11a), (11b) or (11f) according to claim 1, wherein $(R_9)_{0-3}$ and $Z_1$ are as defined above.

**4.** A reactive dye according to claim 2, wherein

$D_2$ is a radical of formula (15)

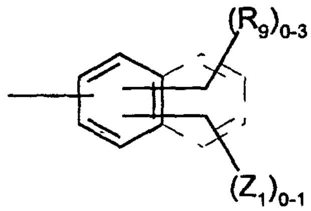

(15)

wherein $(R_9)_{0-3}$ denotes from 0 to 3 identical or different substituents from the group $C_1$-$C_4$alkyl, $C_1$-$C_4$alkoxy, halogen, carboxy and sulfo, and
$Z_1$, where present, is a radical of formula (2a), (5a), (5b), (5c), (5d) or (5e)

$$-NH-CO-(CH_2)_l-SO_2-Y \quad (2a),$$

$$-SO_2-Y \quad (5a),$$

$$-CO-NH-(CH_2)_k-SO_2-Y \quad (5b),$$

$$-NH-CO-CH(Hal)-CH_2-Hal \quad (5c),$$

$$-NH-CO-C(Hal)=CH_2 \quad (5d),$$

or

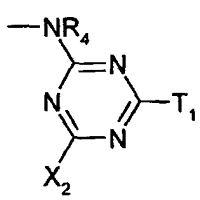

(5e)

wherein
$R_4$ is hydrogen,
Hal is bromine,
$X_2$ is chlorine or fluorine,
Y is vinyl, β-chloroethyl or β-sulfatoethyl,
$T_1$ is $C_1$-$C_4$alkoxy, $C_1$-$C_4$alkylthio, hydroxy, amino, N-mono- or N,N-di-$C_1$-$C_4$alkylamino unsubstituted or substituted in the alkyl moiety by hydroxy, sulfato or by sulfo, morpholino, or phenylamino or N-$C_1$-$C_4$alkyl-N-phenylamino (wherein the alkyl is unsubstituted or substituted by hydroxy, sulfo or by sulfato) each unsubstituted or substituted in the phenyl ring by sulfo, carboxy, acetylamino, chlorine, methyl or by methoxy, or naphthylamino unsubstituted or substituted by from 1 to 3 sulfo groups, or is a fibre-reactive radical of formula (6c') or (6d')

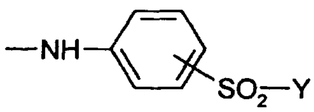

(6c')

or

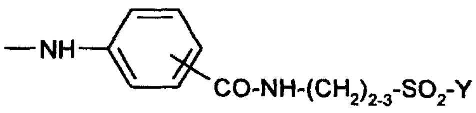

(6d')

and Y is as defined above,
k is the number 2 or 3 and
l is the number 3 or 4.

**5.** A reactive dye according to either claim 2 or claim 4, wherein

$D_2$ is a radical of formula (15a), (15b), (15c), (15d) or (15e)

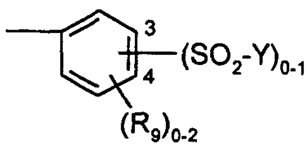

(15a),

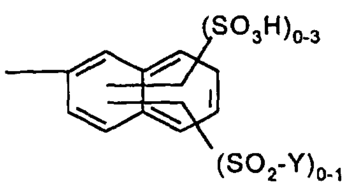

(15b),

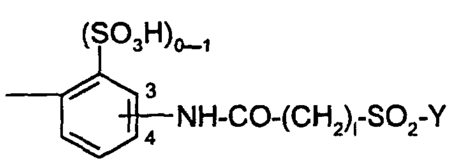

(15c),

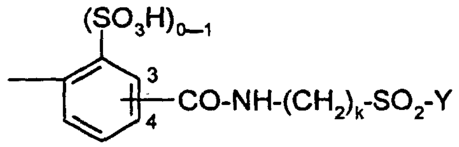

(15d) or

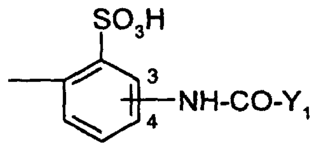

(15e)

wherein
$(R_9)_{0-2}$ denotes from 0 to 2 identical or different substituents selected from the group halogen, $C_1$-$C_4$alkyl, $C_1$-$C_4$alkoxy and sulfo,
$Y_1$ is a group $-CH(Br)-CH_2-Br$ or $-C(Br)=CH_2$,
Y is vinyl, β-chloroethyl or β-sulfatoethyl,
k is the number 2 or 3, and
l is the number 3 or 4.

**6.** Use of a reactive dye according to any one of claims 1 to 5 in the dyeing or printing of hydroxyl-group-containing or nitrogen-containing fibre materials.

**7.** Use according to claim 6, wherein cellulosic fibre materials, especially cotton-containing fibre materials, are dyed or printed.

**8.** An aqueous ink comprising a reactive dye of formula (1a) according to claim 1 or a reactive dye of formula (1b) according to claim 2.

**9.** A method of printing textile fibre materials, paper or plastics films in accordance with the ink-jet printing method, wherein an aqueous ink according to claim 8 is used.

**Revendications**

**1.** Colorants réactifs de formule (la)

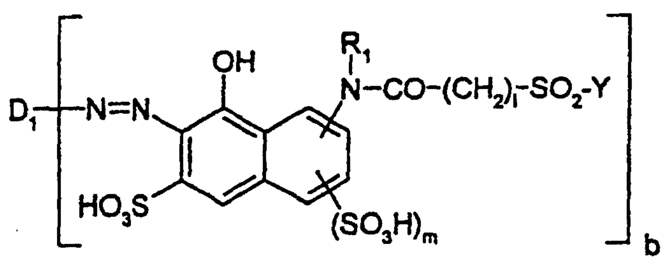

(1a)

dans laquelle

b est le nombre 1,
$R_1$ est un atome d'hydrogène ou un groupe alkyle en $C_1$ à $C_4$,
Y représente un groupe vinyle ou un groupe $-CH_2-CH_2-U$ et U est un groupe clivable en milieu alcalin,

l représente le nombre 2, 3, 4, 5 ou 6,
m est le nombre 0 ou 1, et
$D_1$ représente le groupe de formule

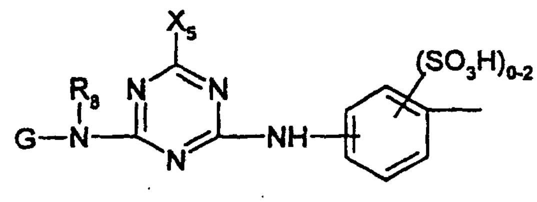

(7)

dans laquelle
$R_8$ est un atome d'hydrogène ou un groupe alkyle en $C_1$ à $C_4$,
$X_5$ représente le fluor ou le chlore, et
G représente un groupe mono-azoïque ou disazoïque de formule (8) ou (9)

$$D\text{-}N{=}N\text{-}(M\text{-}N{=}N)_u\text{-}K\text{-} \quad (8)$$

ou

$$\text{-}D\text{-}N{=}N\text{-}(M\text{-}N{=}N)_u\text{-}K \quad (9),$$

dans lesquelles
D est le reste d'un composant diazoïque de la série benzénique ou naphtalénique,
M est le reste d'un composant moyen de la série benzénique ou naphtalénique,
K est le reste d'un composant de copulation de la série benzénique, naphtalénique, du pyrazolone, 6-hydroxypyridone-(2) ou acide acétique-arylamide, et
u est le nombre 0 ou 1, D, M et K pouvant porter des substituants usuels pour les colorants azoïques, ou
$D_1$ représente le groupe de formule (10a), (10b), (10d), (10e), (10f), (11a), (11b), (11c), (11d), (11e) ou (11f)

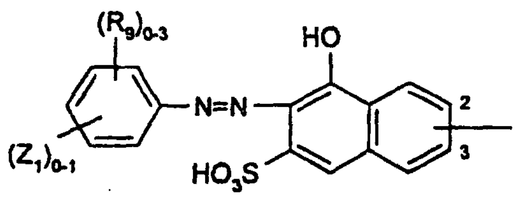

(10a),

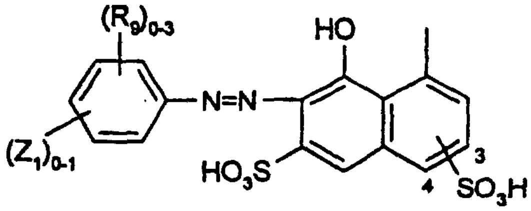

(10b),

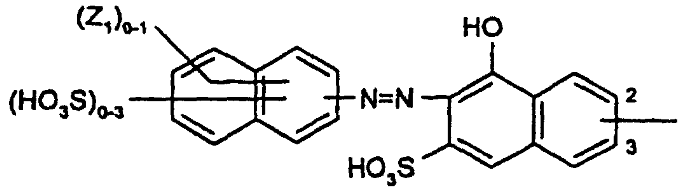

(10d),

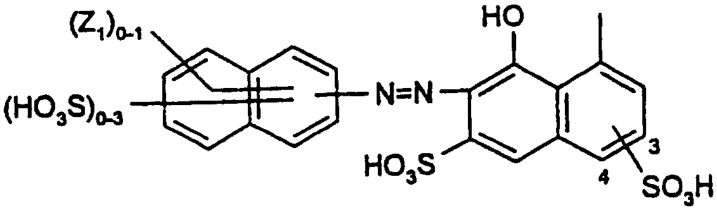

(10e),

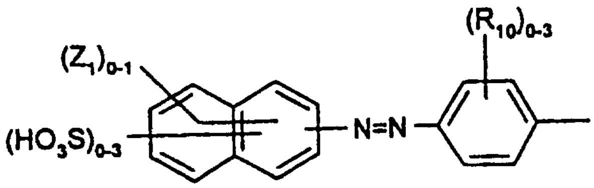

(10f),

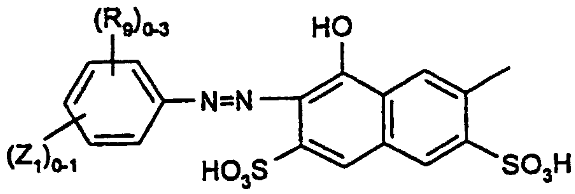

(11a),

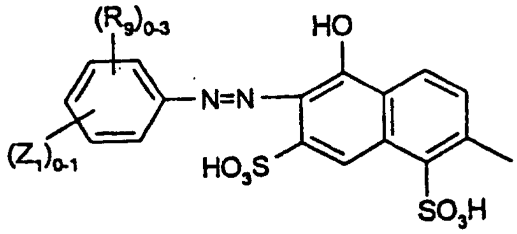

(11b),

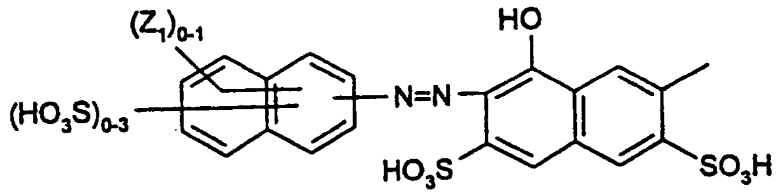

(11c),

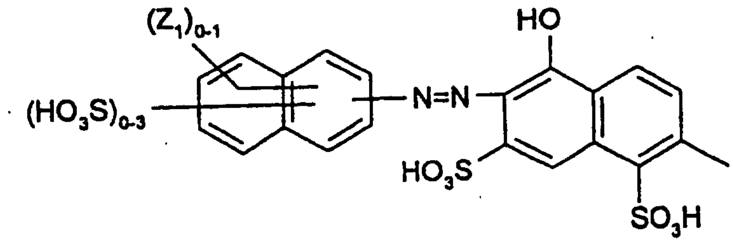

(11d),

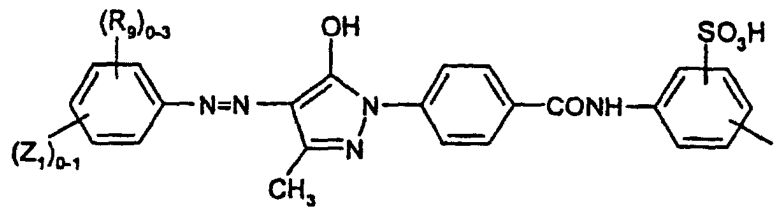

(11e) *ou*

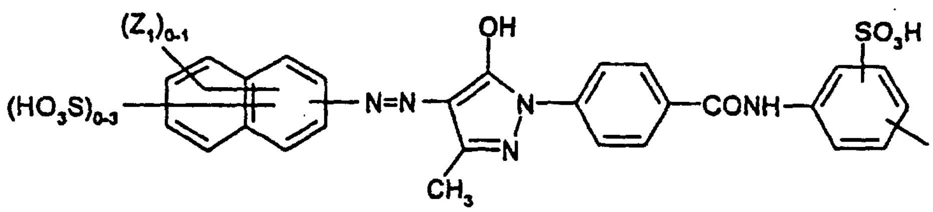

(11f)

dans lesquelles

$(R_9)_{0-3}$ représente 0 à 3 substituants identiques ou différents choisis parmi un groupe alkyle en $C_1$ à $C_4$, alcoxy en $C_1$ à $C_4$, un halogène, un groupe carboxy et sulfo,

$(R_{10})_{0-3}$ représente 0 à 3 substituants identiques ou différents choisis parmi un halogène, un groupe nitro, cyano, trifluorométhyle, sulfamoyle, carbamoyle, alkyle en $C_1$ à $C_4$, alcoxy en $C_1$ à $C_4$ éventuellement substitué par un groupe hydroxy, sulfato ou alcoxy en $C_1$ à $C_4$, amino, alcanoylamino en $C_2$ à $C_4$, uréido, hydroxy, carboxy, sulfométhyle, alkylsulfonylamino en $C_1$ à $C_4$ et sulfo, et

$Z_1$ représente éventuellement un groupe de formule (2a), (5a), (5b), (5c), (5d) ou (5e)

$$-NH-CO-(CH_2)_l-SO_2-Y \quad (2a),$$

$$-SO_2-Y \quad (5a),$$

$-CO-NH-(CH_2)_k-SO_2-Y$ (5b),

$-NH-CO-CH(Hal)-CH_2-Hal$ (5c),

$-NH-CO-C(Hal)=CH_2$ (5d),

ou

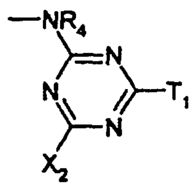

(5e)

dans lesquelles
Hal est le chlore ou le brome ;
$X_2$ représente un halogène, un groupe 3-carboxypyridine-1-yle ou 3-carbamoylpyridine-1-yle ;
$T_1$ a indépendamment la signification de $X_2$, représente un substituant non réactif avec les fibres ou un groupe réactif avec les fibres de formule (6a), (6b), (6c), (6d), (6e) ou (6f)

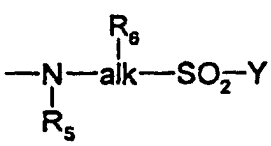

(6a),

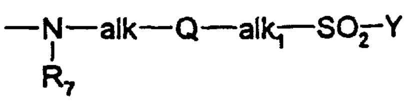

(6b),

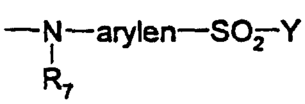

(6c),

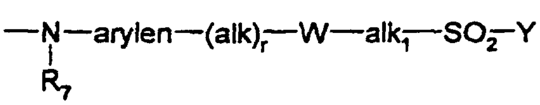

(6d),

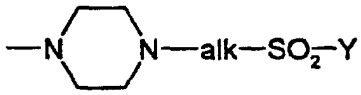

(6e)

ou

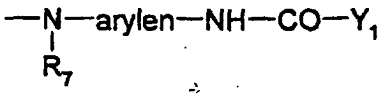

(6f)

dans lesquelles
$R_4$ et $R_7$ ont indépendamment l'un de l'autre les mêmes significations que $R_1$,
$R_5$ représente un atome d'hydrogène, un groupe alkyle en $C_1$ à $C_4$ éventuellement substitué par un groupe hydroxy, sulfo, sulfato, carboxy ou cyano ou un groupe

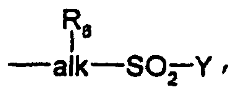

$R_6$ représente un atome d'hydrogène, un groupe hydroxy, sulfo, sulfato, carboxy, cyano, un halogène, un groupe alcoxycarbonyle en $C_1$ à $C_4$, alcanoyloxy en $C_1$ à $C_4$, carbamoyle ou le groupe $-SO_2-Y$,
alk et $alk_1$ sont indépendamment l'un de l'autre un groupe alkylène en $C_1$ à $C_6$ linéaire ou ramifié,
arylen représente un groupe phénylène ou naphtylène non substitué ou substitué par un groupe sulfo, carboxy, alkyle en $C_1$ à $C_4$, alcoxy en $C_1$ à $C_4$ ou un halogène,
Q un groupe -O- ou $-NR_7-$, dans lequel $R_7$ a la signification indiquée ci-dessus,
W représente un groupe $-SO_2-NR_5-$, $-CONR_5-$ ou $-NR_5CO-$, dans lesquels $R_5$ à la signification indiquée ci-dessus,
Y a les significations indiquées ci-dessus,
$Y_1$ représente un groupe $-CH(Hal)-CH_2-Hal$ ou $-C(Hal)=CH_2$ et Hal représente le chlore ou le brome,
l a les significations indiquées ci-dessus, et
k est le nombre 2, 3, 4, 5 ou 6 et r le nombre 0 ou 1.

**2.** Colorants réactifs de formule (1b)

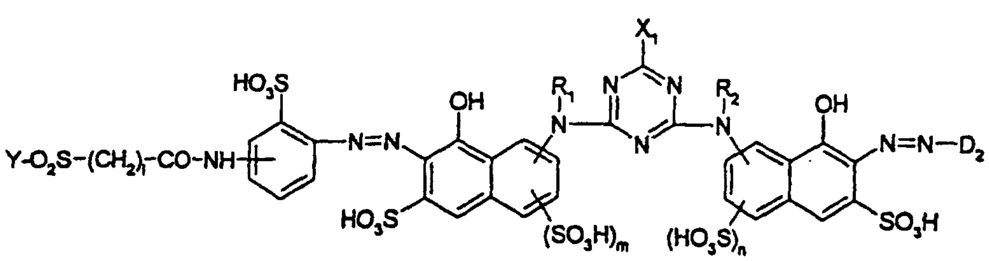

(1b),

dans laquelle

$D_2$ représente le reste d'un composant diazoïque de la série benzénique ou naphtalénique,
$R_1$ et $R_2$ sont indépendamment l'un de l'autre un atome d'hydrogène ou un groupe alkyle en $C_1$ à $C_4$,
$X_1$ est le fluor ou le chlore,
Y représente un groupe vinyle ou un groupe $-CH_2-CH_2-U$ et U est un groupe clivable en milieu alcalin,

l représente le nombre 2, 3, 4, 5 ou 6, et
m et n sont indépendamment l'un de l'autre le nombre 0 ou 1.

**3.** Colorants réactifs selon la revendication 1, **caractérisés en ce que**

$D_1$ comme reste d'un colorant azoïque représente un groupe de formule (7), dans laquelle
$X_5$ est le fluor ou le chlore,
$R_8$ représente un atome d'hydrogène ou un groupe alkyle en $C_1$ à $C_4$, et
G représente un groupe mono-azoïque de formule (10a), (10b), (10d) ou (10e) selon la revendication 1, dans laquelle
$(R_9)_{0-3}$ représente 0 à 3 substituants identiques ou différents choisis parmi un groupe alkyle en $C_1$ à $C_4$, alcoxy en $C_1$ à $C_4$, un halogène, un groupe carboxy et sulfo, et
$Z_1$ représente éventuellement un groupe de formule (2a), (5a), (5b), (5c), (5d) ou (5e) selon la revendication 1, dans laquelle
$R_4$ représente un atome d'hydrogène,
Hal est le brome,
$X_2$ représente le chlore ou le fluor,
Y est un groupe vinyle, β-chloroéthyle ou β-sulfatoéthyle,
$T_1$ représente un groupe alcoxy en $C_1$ à $C_4$, alkylthio en $C_1$ à $C_4$, hydroxy, amino, N-mono- ou N,N-di-alkyle en $C_1$ à $C_4$-amino éventuellement substitué dans la partie alkyle par un groupe hydroxy, sulfato ou sulfo, morpholino, phénylamino ou N-alkyle en $C_1$ à $C_4$-N-phénylamino éventuellement substitué dans le cycle phényle par un groupe sulfo, carboxy, acétylamino, chloro, méthyle ou méthoxy, le groupe alkyle étant éventuellement substitué par un groupe hydroxy, sulfo ou sulfato, naphtylamino éventuellement substitué par 1 à 3 groupes sulfo, ou un groupe réactif avec les fibres de formule (6c') ou (6d')

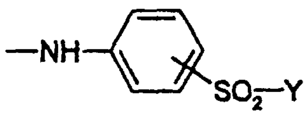

(6c')

ou

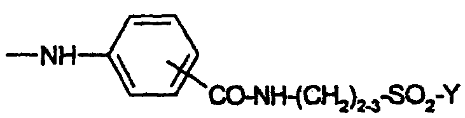

(6d')

dans lesquelles Y a la signification indiquée ci-dessus,
k est le nombre 2 ou 3 et
l représente le nombre 3 ou 4 ; ou
$D_1$ est un groupe de formule (10a), (10b), (11a), (11b) ou (11f) selon la revendication 1, dans lequel les significations indiquées ci-dessus sont valables pour $(R_9)_{0-3}$ et $Z_1$.

**4.** Colorants réactifs selon la revendication 2, **caractérisés en ce que**

$D_2$ est un groupe de formule (15)

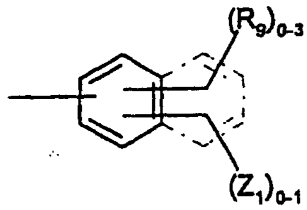

(15),

dans laquelle
$(R_9)_{0-3}$ représente 0 à 3 substituants identiques ou différents choisis parmi un groupe alkyle en $C_1$ à $C_4$, alcoxy en $C_1$ à $C_4$, un halogène, un groupe carboxy et sulfo, et
$Z_1$ représente éventuellement un groupe de formule (2a), (5a), (5b), (5c), (5d) ou (5e)

$$-NH-CO-(CH_2)_l-SO_2-Y \quad (2a),$$

$$-SO_2-Y \quad (5a),$$

$$-CO-NH-(CH_2)_k-SO_2-Y \quad (5b),$$

$$-NH-CO-CH(Hal)-CH_2-Hal \quad (5c),$$

$$-NH-CO-C(Hal)=CH_2 \quad (5d)$$

ou

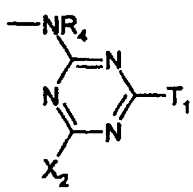

(5e)

dans lesquelles
$R_4$ représente un atome d'hydrogène,
Hal est le brome ;
$X_2$ représente le chlore ou le fluor,
Y est un groupe vinyle, β-chloroéthyle ou β-sulfatoéthyle,
$T_1$ représente un groupe alcoxy en $C_1$ à $C_4$, , alkylthio en $C_1$ à $C_4$, hydroxy, amino, N-mono- ou N,N-di-alkyle en Ci à $C_4$-amino éventuellement substitué dans la partie alkyle par un groupe hydroxy, sulfato ou sulfo, morpholino, phénylamino ou N-alkyle en $C_1$ à $C_4$-N-phénylamino éventuellement substitué dans le cycle phényle par un groupe sulfo, carboxy, acétylamino, chloro, méthyle ou méthoxy, dans lequel le groupe alkyle est éventuellement substitué par un groupe hydroxy, sulfo ou sulfato, naphtylamino éventuellement substitué par 1 à 3 groupes sulfo, ou un groupe réactif avec les fibres de formule (6c') ou (6d')

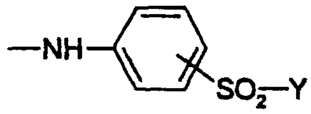

(6c')

ou

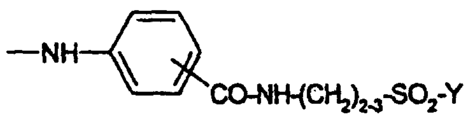

(6d')

et
Y a la signification indiquée ci-dessus,
k est le nombre 2 ou 3 et
l représente le nombre 3 ou 4.

5. Colorants réactifs selon une des revendications 2 et 4, **caractérisés en ce que** $D_2$ représente un groupe de formule (15a), (15b), (15c), (15d) ou (15e)

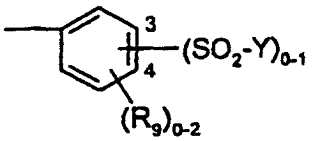

**(15a),**

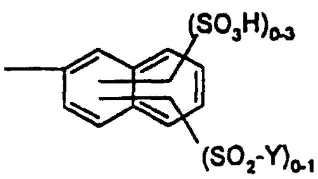

**(15b),**

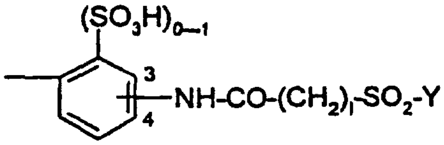

**(15c),**

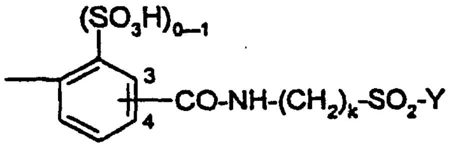

**(15d)**

ou

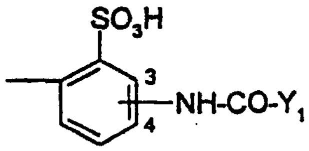

(15e),

dans lesquelles

$(R_9)_{0-2}$ représente 0 à 2 substituants identiques ou différents l'un de l'autre choisis parmi un halogène, un groupe alkyle en $C_1$ à $C_4$, alcoxy en $C_1$ à $C_4$ et sulfo,
$Y_1$ représente un groupe $-CH(Br)-CH_2-Br$ ou $-C(Br)=CH_2$,
Y est un groupe vinyle, β-chloroéthyle ou β-sulfatoéthyle,
k représente le nombre 2 ou 3, et
l représente le nombre 3 ou 4.

**6.** Utilisation de colorants réactifs selon une des revendications 1 à 5 pour la teinture ou l'impression de matériaux fibreux contenant des groupes hydroxyle ou contenant de l'azote.

**7.** Utilisation selon la revendication 6, **caractérisée en ce qu'**on teinte ou on imprime des matériaux fibreux cellulosiques, en particulier des matériaux fibreux contenant du coton.

**8.** Encres aqueuses, **caractérisées en ce qu'**elles contiennent un colorant réactif de formule (1a) selon la revendication 1 ou un colorant réactif de formule (1b) selon la revendication 2.

**9.** Procédé pour l'impression de matériaux fibreux textiles, de papier ou de feuilles de matière plastique selon le procédé d'impression par jet d'encre, **caractérisé en ce qu'**on utilise une encre aqueuse selon la revendication 8.